(19) Europäisches Patentamt
European Patent Office
Office européen des brevets

(11) EP 4 742 568 A1

(12) EUROPEAN PATENT APPLICATION
published in accordance with Art. 153(4) EPC

(43) Date of publication:
13.05.2026 Bulletin 2026/20

(21) Application number: 24858471.6

(22) Date of filing: 23.08.2024

(51) International Patent Classification (IPC):
H04L 1/00 (2006.01)

(52) Cooperative Patent Classification (CPC):
H04L 1/00; H04W 72/1273; H04W 72/23

(86) International application number:
PCT/CN2024/114281

(87) International publication number:
WO 2025/044935 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023 CN 202311086557

(71) Applicant: Huawei Technologies Co., Ltd.
Shenzhen, Guangdong 518129 (CN)

(72) Inventors:
• CHEN, Lei
Shenzhen, Guangdong 518129 (CN)
• YAN, Mao
Shenzhen, Guangdong 518129 (CN)
• LIU, Fengwei
Shenzhen, Guangdong 518129 (CN)
• QIU, Jing
Shenzhen, Guangdong 518129 (CN)

(74) Representative: Gill Jennings & Every LLP
The Broadgate Tower
20 Primrose Street
London EC2A 2ES (GB)

(54) **METHOD FOR TRANSMITTING PRECODING MATRIX, AND COMMUNICATION APPARATUS**

(57) This application provides a precoding matrix transmission method and a communication apparatus, to reduce overheads for feeding back channel information and reduce power consumption of a terminal device. The method includes: A terminal device receives first configuration information, where the first configuration information is used to configure downlink transmission resources corresponding to K port groups, each of the K port groups includes a plurality of antenna ports, and K is a positive integer; and the terminal device sends precoding matrix indicator PMI information, where the PMI information indicates v groups of parameters, and any one of the v groups of parameters includes at least one first parameter, where the at least one first parameter corresponds to at least one of P groups of channel information, the P groups of channel information are determined based on a downlink reference signal received on the downlink transmission resources corresponding to the K port groups, v is a positive integer, and P is an integer greater than 1.

FIG. 4

**Description**

CROSS-REFERENCE TO RELATED APPLICATIONS

This application claims priority to Chinese Patent Application No. 202311086557.7, filed with the China National Intellectual Property Administration on August 25, 2023 and entitled "PRECODING MATRIX TRANSMISSION METHOD AND COMMUNICATION APPARATUS", which is incorporated herein by reference in its entirety.

TECHNICAL FIELD

This application relates to the field of communication technologies, and in particular, to a precoding matrix transmission method and a communication apparatus.

BACKGROUND

In a hybrid beamforming (Hybrid beamforming, HBF) scenario, a network device may select directions of a plurality of analog beams, and deliver, on different analog beams, pilot signals for channel estimation. For a terminal device, a process in which the network device selects an analog beam is referred to as beam training or beam sweeping.
Currently, the network device allocates different pilot resources to different analog beams, and the terminal device measures pilot signals based on the different pilot resources and feeds back measurement results. However, the network device can select only one analog beam at a same moment, that is, the pilot signals corresponding to the different analog beams can be sent only in a time-division manner, reducing communication efficiency. In addition, as more analog beams are selected, the terminal device needs to measure more pilot resources, and feedback overheads are higher, increasing power consumption of the terminal device.

SUMMARY

This application provides a precoding matrix transmission method and a communication apparatus, to reduce overheads for feeding back channel information by a terminal device side and reduce power consumption of a terminal device.
According to a first aspect, an embodiment of this application provides a precoding matrix transmission method, applied to a terminal device and including: receiving first configuration information, where the first configuration information is used to configure downlink transmission resources corresponding to K port groups, each of the K port groups includes a plurality of antenna ports, and K is a positive integer; and sending precoding matrix indicator PMI information, where the PMI information indicates v groups of parameters, and any one of the v groups of parameters includes at least one first parameter and a common parameter combination corresponding to P groups of channel information. The at least one first parameter corresponds to at least one of the P groups of channel information, where for example, the at least one first parameter is in one-to-one correspondence with the at least one of the P groups of channel information. The P groups of channel information are determined based on a downlink reference signal received on the downlink transmission resources corresponding to the K port groups, v is a positive integer, and P is an integer greater than 1.
In such a design, joint feedback for a plurality of groups of channel information is implemented, that is, the plurality of groups of channel information are fed back simultaneously, to reduce overheads for feeding back channel information by a terminal device side and reduce power consumption of the terminal device.
In a possible design, the method further includes: receiving second configuration information, where the second configuration information is used to configure uplink transmission resources corresponding to the K port groups; and sending, based on the second configuration information, an uplink reference signal on the uplink transmission resources corresponding to the K port groups. The uplink reference signal may be used by a network device to perform channel estimation, to obtain channel information for supplementing the PMI information, thereby improving communication performance of subsequent downlink data transmission.
In a possible design, a value of P may be indicated by a network device to the terminal device. For example, the method further includes: receiving information indicating the value of P; or receiving index set information indicating the P groups of channel information.
In a possible design, the common parameter combination includes one or more of the following parameters: second parameter $W_1$, third parameter $W_f^H$, and fourth parameter $\tilde{W}_2$, the PMI information is used to determine v groups of precoding matrices, any one of the v groups of precoding matrices includes a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \widetilde{W}_2 \times W_f^H;$$

or

$$W = A_{p,l} \times W_1 \times \widetilde{W}_2 \times W_f^H.$$

$A_{p,l}$ represents a preset matrix or a first parameter that corresponds to a group of channel information numbered $p$ in the P groups of channel information and that is included in a group of parameters numbered $l$ in the v groups of parameters, $p$ is an integer less than or equal to P, $l$ is an integer less than or equal to v, and different values of $p$ correspond to different $A_{p,l}$. For example, the preset matrix may be an identity matrix.

In a possible design, $A_{p,l}$ (for example, a first coefficient) is determined based on F coefficients, F is an integer greater than 1, and a value of F is determined based on the value of P or a quantity of antenna ports included in one of the K port groups.

For example, the F coefficients include a first part of coefficients and a second part of coefficients, where the first part of coefficients are the same as the second part of coefficients, and the PMI information indicates the first part of coefficients or the second part of coefficients. Such a design may be applied to a scenario in which in a same port group, different polarizations are similar. Same coefficients are used for the different polarizations, to reduce feedback overheads.

For example, the second part of coefficients are determined based on the first part of coefficients and a first coefficient, and the PMI information indicates the first part of coefficients and the first coefficient. In such a design, a difference between different polarizations is considered, and the first coefficient is introduced to simulate the difference between the different polarizations, to reduce feedback overheads.

For example, a value of one of the F coefficients is one of J values, the PMI information indicates the J values, and J is a positive integer equal to F. Such a design may be used for a scenario in which in a same port group, different polarizations are not similar, where for example, different ports are orthogonal, to reduce feedback overheads.

For example, a value of one of the F coefficients is one of J values, the PMI information indicates the J values, and J is a positive integer less than F. Optionally, a value of J corresponds to a quantity of sub port groups included in one port group. Such a design may be used for a scenario in which in a same port group, different ports are orthogonal, and ports in a sub port group are similar, to reduce a quantity of feedback coefficients, thereby reducing feedback overheads.

For example, the F coefficients include a first part of coefficients and a second part of coefficients, a value of a coefficient in the first part of coefficients is one of J values, the second part of coefficients are determined based on a second coefficient and the first part of coefficients, and the PMI information includes the J values and the second coefficient, where J is a positive integer less than or equal to F. Optionally, a value of J corresponds to a quantity of sub port groups included in one port group. Such a design may be used for a scenario in which in a same port group, different ports are orthogonal, ports in a sub port group are similar, and different polarizations are different, to reduce a quantity of feedback coefficients, thereby reducing feedback overheads.

In addition, optionally, when $A_{p,l}$ is a preset matrix, or may be an identity matrix, the terminal device may not include the preset matrix in the PMI information, so as to reduce feedback overheads.

In a possible design, at least one parameter in the common parameter combination and the first parameter are determined based on a codebook parameter combination, the codebook parameter combination includes one or more of the following parameters: quantity L of beams, factor $p_\upsilon$ of a quantity of vectors, and factor $\beta$ of a quantity of non-zero elements, and a value of the at least one parameter in the codebook parameter combination is determined based on the value of P. A codebook parameter combination corresponding to a parameter that is in the codebook parameter combination and that is related to a quantity P of to-be-reported information is designed, to adapt to a plurality of feedback quantity requirements, so that implementation is more flexible.

In a possible design, the first configuration information is further used to configure Q groups of coefficients, Q is greater than K, Q groups of channel information determined based on the Q groups of coefficients and K groups of channel information include the P groups of channel information, and the K groups of channel information are determined based on the downlink reference signal on the downlink transmission resources corresponding to the K port groups. In such a design, a network device sends fewer reference signals, and the terminal device simulates more channel information based on the Q groups of coefficients (or referred to as weighting coefficients), to reduce communication overheads between the network device and the terminal device, for example, reduce communication overheads for the reference signals.

In a possible design, K is greater than 1, K groups of channel information are determined based on the downlink reference signal on the downlink transmission resources corresponding to the K port groups, the K groups of channel information include the P groups of channel information, and P is less than or equal to K. In such a design, the terminal device is supported in flexibly selecting a part or all of the groups of channel information in the K groups of channel information estimated based on the reference signal for feedback.

According to a second aspect, an embodiment of this application provides a precoding matrix transmission method, applied to a network device. The method includes: sending first configuration information, where the first configuration information is used to configure downlink transmission resources corresponding to K port groups, each of the K port groups includes a plurality of antenna ports, and K is a positive integer; and receiving precoding matrix indicator PMI information, where the PMI information indicates v groups of parameters, and any one of the v groups of parameters includes at least one first parameter and a common parameter combination corresponding to P groups of channel information, where the at least one first parameter corresponds to (is in one-to-one correspondence with) at least one of the P groups of channel information, the P groups of channel information are determined based on a downlink reference signal received on the downlink transmission resources corresponding to the K port groups, v is a positive integer, and P is an integer greater than 1.

In a possible design, the method further includes: sending second configuration information, where the second configuration information is used to configure uplink transmission resources corresponding to the K port groups; receiving an uplink reference signal on the uplink transmission resources corresponding to the K port groups, and determining P' groups of channel information based on the received uplink reference signal, where P' is a positive integer less than or equal to P; and performing transmission of downlink data based on the PMI and/or the P' groups of channel information.

In a possible design, a value of P may be indicated by the network device to a terminal device. For example, the method further includes: sending information indicating a value of P; or sending index set information indicating the P groups of channel information.

In a possible design, the common parameter combination includes one or more of the following parameters: second parameter $W_1$, third parameter $W_f^H$, and fourth parameter $\tilde{W}_2$, the PMI information is used to determine v groups of precoding matrices, any one of the v groups of precoding matrices includes a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \tilde{W}_2 \times W_f^H;$$

or

$$W = A_{p,l} \times W_1 \times \tilde{W}_2 \times W_f^H.$$

$A_{p,l}$ represents a preset matrix or a first parameter that corresponds to a group of channel information numbered $p$ in the P groups of channel information and that is included in a group of parameters numbered $l$ in the v groups of parameters, $p$ is an integer less than or equal to P, $l$ is an integer less than or equal to v, and different values of $p$ correspond to different $A_{p,l}$. For example, the preset matrix may be an identity matrix.

In a possible design, $A_{p,l}$ (for example, a first coefficient) is determined based on F coefficients, F is an integer greater than 1, and a value of F is determined based on the value of P or a quantity of antenna ports included in one of the K port groups.

For example, the F coefficients include a first part of coefficients and a second part of coefficients, where the first part of coefficients are the same as the second part of coefficients, and the PMI information indicates the first part of coefficients or the second part of coefficients.

For example, the second part of coefficients are determined based on the first part of coefficients and a first coefficient, and the PMI information indicates the first part of coefficients and the first coefficient.

For example, a value of one of the F coefficients is one of J values, the PMI information indicates the J values, and J is a positive integer equal to F.

For example, a value of one of the F coefficients is one of J values, the PMI information indicates the J values, and J is a positive integer less than F. Optionally, a value of J corresponds to a quantity of sub port groups included in one port group.

For example, the F coefficients include a first part of coefficients and a second part of coefficients, a value of a coefficient in the first part of coefficients is one of J values, the second part of coefficients are determined based on a second coefficient and the first part of coefficients, and the PMI information includes the J values and the second coefficient, where J is a positive integer less than or equal to F. Optionally, a value of J corresponds to a quantity of sub port groups included in one port group.

In addition, optionally, when $A_{p,l}$ is a preset matrix, or may be an identity matrix, the terminal device may not include the preset matrix in the PMI information, so as to reduce feedback overheads.

In a possible design, at least one parameter in the common parameter combination and the first parameter are determined based on a codebook parameter combination, the codebook parameter combination includes one or more of the following parameters: quantity L of beams, factor $p_v$ of a quantity of vectors, and factor $\beta$ of a quantity of non-zero elements, and a value of the at least one parameter in the codebook parameter combination is determined based on the value of P.

In a possible design, the first configuration information is further used to configure Q groups of coefficients, Q is greater than K, Q groups of channel information determined based on the Q groups of coefficients and K groups of channel information include the P groups of channel information, and the K groups of channel information are determined based on the downlink reference signal on the downlink transmission resources corresponding to the K port groups.

In a possible design, K is greater than 1, K groups of channel information are determined based on the downlink reference signal on the downlink transmission resources corresponding to the K port groups, the K groups of channel information include the P groups of channel information, and P is less than or equal to K.

According to a third aspect, an embodiment of this application provides a communication apparatus. The communication apparatus may be a terminal device, may be an apparatus, a module, a chip, or the like in the terminal device, or may be an apparatus that can be used in matching with the terminal device. In a design, the communication apparatus may include modules that are in one-to-one correspondence with the methods/operations/steps/actions performed and described in the first aspect. The module may be a hardware circuit, may be software, or may be implemented by a hardware circuit in combination with software. In a design, the communication apparatus may include a processing module and a communication module, where the communication module includes a sending unit and a receiving unit. Optionally, the processing module may alternatively be described as a processing unit.

The receiving unit is configured to receive first configuration information, where the first configuration information is used to configure downlink transmission resources corresponding to K port groups, each of the K port groups includes a plurality of antenna ports, and K is a positive integer.

The sending unit is configured to send precoding matrix indicator PMI information under control of the processing module, where the PMI information indicates v groups of parameters, and any one of the v groups of parameters includes at least one first parameter and a common parameter combination corresponding to P groups of channel information. The at least one first parameter corresponds to at least one of the P groups of channel information, where for example, the at least one first parameter is in one-to-one correspondence with the at least one of the P groups of channel information. The P groups of channel information are determined based on a downlink reference signal received on the downlink transmission resources corresponding to the K port groups, v is a positive integer, and P is an integer greater than 1.

In a possible design, the receiving unit is further configured to receive second configuration information, where the second configuration information is used to configure uplink transmission resources corresponding to the K port groups. The processing module is further configured to send, based on the second configuration information, an uplink reference signal on the uplink transmission resources corresponding to the K port groups.

In a possible design, a value of P may be indicated by the network device to a terminal device. The receiving unit is further configured to: receive information indicating the value of P; or receive index set information indicating the P groups of channel information.

In a possible design, the common parameter combination includes one or more of the following parameters: second parameter $W_1$, third parameter $W_f^H$, and fourth parameter $\tilde{W}_2$, the PMI information is used to determine v groups of precoding matrices, any one of the v groups of precoding matrices includes a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \tilde{W}_2 \times W_f^H;$$

or

$$W = A_{p,l} \times W_1 \times \tilde{W}_2 \times W_f^H.$$

$A_{p,l}$ represents a preset matrix or a first parameter that corresponds to a group of channel information numbered $p$ in the P groups of channel information and that is included in a group of parameters numbered $l$ in the v groups of parameters, $p$ is an integer less than or equal to P, $l$ is an integer less than or equal to v, and different values of $p$ correspond to different $A_{p,l}$. For example, the preset matrix may be an identity matrix.

In a possible design, $A_{p,l}$ (for example, a first coefficient) is determined based on F coefficients, F is an integer greater than 1, and a value of F is determined based on the value of P or a quantity of antenna ports included in one of the K port groups.

For example, the F coefficients include a first part of coefficients and a second part of coefficients, where the first part of coefficients are the same as the second part of coefficients, and the PMI information indicates the first part of coefficients or the second part of coefficients.

For example, the second part of coefficients are determined based on the first part of coefficients and a first coefficient, and the PMI information indicates the first part of coefficients and the first coefficient. In such a design, a difference between different polarizations is considered, and the first coefficient is introduced to simulate the difference between the different polarizations, to reduce feedback overheads.

For example, a value of one of the F coefficients is one of J values, the PMI information indicates the J values, and J is a positive integer equal to F.

For example, a value of one of the F coefficients is one of J values, the PMI information indicates the J values, and J is a positive integer less than F. Optionally, a value of J corresponds to a quantity of sub port groups included in one port group.

For example, the F coefficients include a first part of coefficients and a second part of coefficients, a value of a coefficient in the first part of coefficients is one of J values, the second part of coefficients are determined based on a second coefficient and the first part of coefficients, and the PMI information includes the J values and the second coefficient, where J is a positive integer less than or equal to F. Optionally, a value of J corresponds to a quantity of sub port groups included in one port group.

In addition, optionally, when $A_{p,l}$ is a preset matrix, or may be an identity matrix, the terminal device may not include the preset matrix in the PMI information, so as to reduce feedback overheads.

In a possible design, at least one parameter in the common parameter combination and the first parameter are determined based on a codebook parameter combination, the codebook parameter combination includes one or more of the following parameters: quantity L of beams, factor $p_\upsilon$ of a quantity of vectors, and factor $\beta$ of a quantity of non-zero elements, and a value of the at least one parameter in the codebook parameter combination is determined based on the value of P.

In a possible design, the first configuration information is further used to configure Q groups of coefficients, Q is greater than K, Q groups of channel information determined based on the Q groups of coefficients and K groups of channel information include the P groups of channel information, and the K groups of channel information are determined based on the downlink reference signal on the downlink transmission resources corresponding to the K port groups.

In a possible design, K is greater than 1, K groups of channel information are determined based on the downlink reference signal on the downlink transmission resources corresponding to the K port groups, the K groups of channel information include the P groups of channel information, and P is less than or equal to K.

According to a fourth aspect, an embodiment of this application provides a communication apparatus. The communication apparatus may be a network device, may be an apparatus, a module, a chip, or the like in the network device, or may be an apparatus that can be used in matching with the network device. In a design, the communication apparatus may include modules that are in one-to-one correspondence with the methods/operations/steps/actions performed and described in the second aspect. The module may be a hardware circuit, may be software, or may be implemented by a hardware circuit in combination with software. In a design, the communication apparatus may include a processing module and a communication module, where the communication module includes a sending unit and a receiving unit. Optionally, the processing module may alternatively be described as a processing unit.

The sending unit is configured to send first configuration information under control of the processing module, where the first configuration information is used to configure downlink transmission resources corresponding to K port groups, each of the K port groups includes a plurality of antenna ports, and K is a positive integer.

The receiving unit is configured to receive precoding matrix indicator PMI information, where the PMI information indicates v groups of parameters, and any one of the v groups of parameters includes at least one first parameter and a common parameter combination corresponding to P groups of channel information, where the at least one first parameter corresponds to (is in one-to-one correspondence with) at least one of the P groups of channel information, the P groups of channel information are determined based on a downlink reference signal received on the downlink transmission resources corresponding to the K port groups, v is a positive integer, and P is an integer greater than 1.

In a possible design, the sending unit is further configured to: send second configuration information, where the second configuration information is used to configure uplink transmission resources corresponding to the K port groups; receive an uplink reference signal on the uplink transmission resources corresponding to the K port groups. The processing module is further configured to: determine P' groups of channel information based on the received uplink reference signal; and perform transmission of downlink data based on the PMI and/or the P' groups of channel information, where P' is a positive integer less than or equal to P.

In a possible design, a value of P may be indicated by the network device to a terminal device. The sending unit is further configured to: send information indicating a value of P; or send index set information indicating the P groups of channel information.

In a possible design, the common parameter combination includes one or more of the following parameters: second parameter $W_1$, third parameter $W_f^H$, and fourth parameter $\tilde{W}_2$, the PMI information is used to determine v groups of precoding matrices, any one of the v groups of precoding matrices includes a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \widetilde{W}_2 \times W_f^H;$$

or

$$W = A_{p,l} \times W_1 \times \widetilde{W}_2 \times W_f^H.$$

$A_{p,l}$ represents a preset matrix or a first parameter that corresponds to a group of channel information numbered $p$ in the P groups of channel information and that is included in a group of parameters numbered $l$ in the v groups of parameters, $p$ is an integer less than or equal to P, $l$ is an integer less than or equal to v, and different values of $p$ correspond to different $A_{p,l}$. For example, the preset matrix may be an identity matrix.

In a possible design, $A_{p,l}$ (for example, a first coefficient) is determined based on F coefficients, F is an integer greater than 1, and a value of F is determined based on the value of P or a quantity of antenna ports included in one of the K port groups.

For example, the F coefficients include a first part of coefficients and a second part of coefficients, where the first part of coefficients are the same as the second part of coefficients, and the PMI information indicates the first part of coefficients or the second part of coefficients.

For example, the second part of coefficients are determined based on the first part of coefficients and a first coefficient, and the PMI information indicates the first part of coefficients and the first coefficient.

For example, a value of one of the F coefficients is one of J values, the PMI information indicates the J values, and J is a positive integer equal to F.

For example, a value of one of the F coefficients is one of J values, the PMI information indicates the J values, and J is a positive integer less than F. Optionally, a value of J corresponds to a quantity of sub port groups included in one port group.

For example, the F coefficients include a first part of coefficients and a second part of coefficients, a value of a coefficient in the first part of coefficients is one of J values, the second part of coefficients are determined based on a second coefficient and the first part of coefficients, and the PMI information includes the J values and the second coefficient, where J is a positive integer less than or equal to F. Optionally, a value of J corresponds to a quantity of sub port groups included in one port group.

In addition, optionally, when $A_{p,l}$ is a preset matrix, or may be an identity matrix, the terminal device may not include the preset matrix in the PMI information, so as to reduce feedback overheads.

In a possible design, at least one parameter in the common parameter combination and the first parameter are determined based on a codebook parameter combination, the codebook parameter combination includes one or more of the following parameters: quantity L of beams, factor $p_v$ of a quantity of vectors, and factor $\beta$ of a quantity of non-zero elements, and a value of the at least one parameter in the codebook parameter combination is determined based on the value of P.

In a possible design, the first configuration information is further used to configure Q groups of coefficients, Q is greater than K, Q groups of channel information determined based on the Q groups of coefficients and K groups of channel information include the P groups of channel information, and the K groups of channel information are determined based on the downlink reference signal on the downlink transmission resources corresponding to the K port groups.

In a possible design, K is greater than 1, K groups of channel information are determined based on the downlink reference signal on the downlink transmission resources corresponding to the K port groups, the K groups of channel information include the P groups of channel information, and P is less than or equal to K.

According to a fifth aspect, an embodiment of this application provides a communication apparatus. The communication apparatus includes a processor, configured to implement the method described in the first aspect. The processor is coupled to a memory, and the memory is configured to store instructions and data. When executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a sixth aspect, an embodiment of this application provides a communication apparatus. The communication apparatus includes a processor, configured to implement the method described in the second aspect. The processor is coupled to a memory, and the memory is configured to store instructions and data. When executing the instructions stored in the memory, the processor may implement the method described in the second aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a seventh aspect, an embodiment of this application provides a communication system, including the communication apparatus described in the third aspect or the fifth aspect; and the communication apparatus described in the fourth aspect or the sixth aspect.

According to an eighth aspect, an embodiment of this application further provides a computer program. When the computer program is run on a computer, the computer is caused to perform the method provided in the first aspect or the second aspect.

According to a ninth aspect, an embodiment of this application further provides a computer program product, including instructions. When the instructions are run on a computer, the computer is caused to perform the method provided in the first aspect or the second aspect.

According to a tenth aspect, an embodiment of this application further provides a computer-readable storage medium. The computer-readable storage medium stores a computer program or instructions. When the computer program or the instructions are run on a computer, the computer is caused to perform the method provided in the first aspect or the second aspect.

According to an eleventh aspect, an embodiment of this application further provides a chip. The chip is configured to read a computer program stored in a memory, to perform the method provided in the first aspect or the second aspect, or the chip includes a circuit configured to perform the method provided in the first aspect or the second aspect.

According to a twelfth aspect, an embodiment of this application further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete device.

For effects of the solutions provided in any one of the second aspect to the twelfth aspect, refer to the corresponding descriptions in the first aspect.

## BRIEF DESCRIPTION OF DRAWINGS

FIG. 1A is a diagram of an architecture of a communication system;
FIG. 1B is a diagram of an architecture of a radio access network RAN;
FIG. 2 is a diagram of an architecture of HBF;
FIG. 3 is a schematic flowchart of existing feedback for PMIs of a plurality of analog beams;
FIG. 4 is a schematic flowchart of a precoding matrix transmission method according to an embodiment of this application;
FIG. 5 is a diagram 1 of a structure of a communication apparatus according to an embodiment of this application;
FIG. 6 is a diagram 1 of a structure of a communication apparatus according to an embodiment of this application;
FIG. 7 is a diagram 1 of a structure of a communication apparatus according to an embodiment of this application; and
FIG. 8 is a diagram 1 of a structure of a communication apparatus according to an embodiment of this application.

## DESCRIPTION OF EMBODIMENTS

To make objectives, technical solutions, and advantages of embodiments of this application clearer, the following further describes embodiments of this application in detail with reference to accompanying drawings.

At least one piece (item) mentioned below in embodiments of this application indicates one or more pieces (items). A plurality of pieces (items) means two or more pieces (items). "And/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects. In addition, it should be understood that, although terms such as first and second may be used in embodiments of this application to describe objects, these objects should not be limited by these terms. These terms are merely used for distinguishing the objects from each other.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" represents giving an example, an illustration, or a description. Any method or design scheme described as an "example" or "for example" in embodiments of this application should not be explained as being more preferred or having more advantages than another method or design scheme. Exactly, use of the word "example", "for example", or the like is intended to present a related concept in a specific manner.

Technologies provided in embodiments of this application may be applied to various communication systems. For example, the communication system may be the technologies provided in embodiments of this application and may be applied to the various communication systems, and the communication system may be a 4th generation (4th generation, 4G) communication system, for example, a long term evolution (long term evolution, LTE) system or an evolved UMTS terrestrial radio access network (evolved UMTS terrestrial radio access network, E-UTRAN), where UMTS is a universal mobile telecommunications system (universal mobile telecommunications system, UMTS). The communication system may alternatively be a 5th generation (5th generation, 5G) communication system, a worldwide interoperability for microwave access (worldwide interoperability for microwave access, WiMAX) system, a wireless local area network (wireless local area network, WLAN) system, a converged system of a plurality of systems, a future communication system, or the like. The 5G communication system may also be referred to as a new radio (new radio, NR) system.

A network element in the communication system may send a signal to another network element or receive a signal from another network element. The signal may include information, data, or the like. The network element may also be referred to as an entity, a network entity, a device, a communication device, a communication module, a node, a communication node, or the like. In embodiments of this application, the network element is used as an example for description. For example, the communication system may include at least one terminal device and at least one network device. A signal sending network element may be a network device, and a signal receiving network element may be a terminal device; or a signal sending network element may be a terminal device, and a signal receiving network element may be a network device. In addition, it may be understood that, if the communication system includes a plurality of terminal devices, the plurality of terminal devices may also send signals to each other. In other words, both a signal sending network element and a signal receiving network element may be terminal devices.

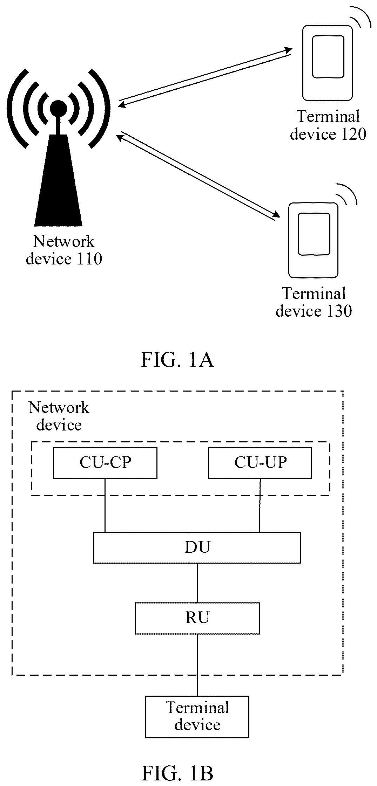

FIG. 1A shows a communication system 100. In an example, the communication system 100 includes a network device 110 and two terminal devices: a terminal device 120 and a terminal device 130. At least one of the terminal device 120 and the terminal device 130 may send uplink data to the network device 110, and the network device 110 may receive the uplink data. The network device may send downlink data to at least one of the terminal device 120 and the terminal device 130.

The following describes in detail the terminal devices and the network device in FIG. 1A.

The terminal device is also referred to as a terminal, user equipment (user equipment, UE), a mobile station (mobile station, MS), a mobile terminal (mobile terminal, MT), or the like, and is a device that provides a user with voice and/or data connectivity. The terminal device may communicate with one or more core network devices through the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Some examples of the terminal device are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal like a smart fueler, in a smart city (smart city), a terminal device on a high-speed railway, and a wireless terminal like a smart speaker, a smart coffee machine, or a smart printer, in a smart home (smart home).

In embodiments of this application, a communication apparatus configured to implement a function of the terminal device may be a terminal device, may be a terminal device having a part of the function of the terminal, or may be an apparatus that can support the terminal device in implementing the function, for example, a chip system. The apparatus may be installed in the terminal device. In embodiments of this application, the chip system may include a chip, or may include a chip and another discrete device. In the technical solutions provided in embodiments of this application, an example in which the communication apparatus configured to implement the function of the terminal device is the terminal device or the UE is used for description.

In embodiments of this application, "sending information to... (a terminal device)" may be understood as that a destination end of the information is the terminal device, and may include directly or indirectly sending the information to the terminal device. "Receiving information from ... (a terminal device)" may be understood as that a source end of the information is the terminal device, and may include directly or indirectly receiving the information from the terminal device. Necessary processing, for example, a format change, may be performed on information between the source end and the destination end for sending the information. However, the destination end may understand valid information from the source end. A similar expression in this application may be understood similarly. Details are not described herein again.

The network device may be a base station (base station, BS), and the network device may be referred to as an access network device, an access node (access node, AN), or a radio access node (radio access node, RAN). The network device may be connected to a core network (for example, an LTE core network or a 5G core network), and the network device may provide a wireless access service for the terminal device. Some examples of the network device include but are not limited to at least one of the following: a next generation NodeB (next generation NodeB, gNB) in 5G, a network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a transmission reception point (transmission reception point, TRP), a transmitting point (transmitting point, TP), and/or a mobile switching center. Alternatively, the network device may be a relay station, an access point, a vehicle-mounted device, a wearable device, a network device in a future evolved public land mobile network (public land mobile network, PLMN), or the like. The network device in embodiments of this application may be an integrated base station, or may be a base station including a central unit (central unit, CU) and/or a distributed unit (distributed unit, DU). The base station including the CU and the DU may also be referred to as a base station with a CU and a DU that are separated. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU. Alternatively, the network device in embodiments of this application may be an antenna unit (radio unit, RU). Alternatively, the network device in embodiments of this application may be of an open radio access network (open radio access network, O-RAN) architecture or the like. A specific deployment manner of the network device is not limited in embodiments of this application. For example, when the network device is of the O-RAN architecture, the network device shown in embodiments of this application may be an access network device in the O-RAN, for example, one or a combination of more of a CU, a DU, or an RU, may be a module in the access network device, or the like. In an O-RAN system, a CU may also be referred to as an open (open, O)-CU, a CU-CP may also be referred to as an O-CU-CP, a CU-UP may also be referred to as an O-CU-UP, and an RU may also be referred to as an O-RU.

In embodiments of this application, a communication apparatus configured to implement a function of the network device may be a network device, may be an apparatus having a part of the function of the network device, or may be an apparatus that can support the network device in implementing the function, for example, a chip system. The apparatus may be installed in the network device. In embodiments of this application, the chip system may include a chip, or may include a chip and another discrete device. In the technical solutions provided in embodiments of this application, an example in which the communication apparatus configured to implement the function of the network device is the network device is used for description.

In embodiments of this application, "sending information to... (a network device)" may be understood as that a destination end of the information is the network device, and may include directly or indirectly sending the information to the network device. "Receiving information from... (a network device)" may be understood as that a source end of the information is the network device, and may include directly or indirectly receiving the information from the network device. Necessary processing, for example, a format change, may be performed on information between the source end and the destination end for sending the information. However, the destination end may understand valid information from the source end. A similar expression in this application may be understood similarly. Details are not described herein again.

It should be understood that quantities and types of the devices in the communication system shown in FIG. 1A are merely used as examples, and embodiments of this application are not limited thereto. In actual application, the communication system may further include more terminal devices and more network devices, and may further include another network element, for example, may include a core network device, and/or a network management device like an operation, administration, and management (operation, administration, and maintenance, OAM) device.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With evolution of a network architecture and emergence of a new service scenario, the technical solutions provided in embodiments of this application are also applicable to a similar technical problem.

Communication between the network device and the terminal device complies with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

FIG. 1B is a diagram of a radio access network RAN. A network device includes one or more CUs, one or more DUs, and one or more radio units (radio units, RUs). For clarity, FIG. 1B shows only one CU, one DU, and one RU. The CU is configured to connect to a core network and the one or more DUs. Optionally, the CU may have a part of a function of the core network. The CU may include a CU-CP and a CU-UP.

The CU and the DU may be configured based on a function of a protocol layer of a wireless network implemented by the CU and the DU. For example, the CU is configured to implement functions of a PDCP layer and a protocol layer above the PDCP layer (for example, an RRC layer and/or an SDAP layer); and the DU is configured to implement a function of a protocol layer below the PDCP layer (for example, an RLC layer, a MAC layer, and/or a PHY layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility management function (access and mobility management function, AMF) network element in a 5G system. The AMF network element is configured to be responsible for mobility management in a mobile network, for example, location updating of a terminal device, network registration of the terminal device, and handover of the terminal device.

The CU-UP may interact with a network element configured to implement a user plane function in the core network. The network element configured to implement the user plane function in the core network, for example, a user plane function (user plane function, UPF) network element in the 5G system, is configured to be responsible for forwarding and receiving data in the terminal device.

The foregoing configurations of the CU and the DU are merely examples. Alternatively, functions of the CU and the DU may be configured as required. For example, the CU or the DU may be configured to have functions of more protocol layers, or the CU or the DU may be configured to have a part of processing functions of protocol layers. For example, a part of a function of the RLC layer and a function of a protocol layer above the RLC layer are set on the CU, and the other part of a function of the RLC layer and a function of a protocol layer below the RLC layer are set on the DU. For another example, division into functions of the CU or the DU may be performed based on service types or other system requirements. For example, division may be performed based on a delay. Functions whose processing time needs to meet a requirement of a small delay are set on the DU, and functions whose processing time does not need to meet the requirement of the delay are set on the CU.

The DU and the RU may work together to implement a function of the PHY layer. One DU may connect to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of the function of the physical layer, and the part of the function is closer to the MAC layer. The lower-layer function of the physical layer may include the other part of the function of the physical layer, and the other part of the function is closer to an intermediate radio frequency side.

The following first explains and describes related terms in embodiments of this application. It should be noted that these explanations are intended to make embodiments of this application easier to understand, but should not be considered as a limitation to the protection scope claimed in this application.

(1) Reference signal

The reference signal in embodiments of this application is used for downlink channel estimation, and mainly includes a downlink reference signal. Optionally, the reference signal may alternatively be described as a pilot signal.

For example, the downlink reference signal may include a channel state information-reference signal (channel state information-reference signal, CSI-RS), a synchronization signal block (synchronization signal/physical broadcast channel block, SSB), a tracking reference signal (tracking reference signal, TRS), or the like. An example of a specific application scenario is as follows.

In a frequency division duplex (frequency division duplex, FDD) communication scenario, because uplink and downlink channels do not have reciprocity or reciprocity between uplink and downlink channels cannot be ensured, a network device usually delivers a CSI-RS to a terminal device, and the terminal device performs channel estimation based on the received CSI-RS, for example, obtains channel state information (channel state information, CSI) of a downlink channel through channel measurement and interference measurement estimation. The terminal device feeds back the CSI to the network device, so that the network device may determine, based on the CSI, configurations such as a resource, a modulation and coding scheme (modulation and coding scheme, MCS), and precoding for scheduling a downlink data channel of the terminal device. It may be understood that the CSI is channel information and is information that can reflect a channel feature or channel quality. The channel information may also be referred to as a channel response. For example, the CSI may be represented by a channel matrix. For example, the CSI includes the channel matrix, or the CSI may include a channel eigenvector.

For example, that the terminal device feeds back the CSI to the network device may include: The terminal device sends feedback quantities such as a rank indicator (rank indicator, RI), a channel quality indicator (channel quality indicator, CQI), and a precoding matrix indicator (precoding matrix indicator, PMI) to the network device. The RI indicates a quantity of downlink transport layers recommended by the terminal device, the CQI indicates a modulation and coding scheme that can be supported by a current channel condition determined by the terminal device, the PMI indicates precoding recommended by the terminal device, and a quantity of precoding layers indicated by the PMI corresponds to the RI.

(2) Hybrid beamforming (Hybrid beamforming, HBF)

In a communication system of a high frequency band, a base station (and a terminal of a part of a frequency band) usually uses a large-scale array antenna (for example, 500 to 1000+antenna units), and a high array gain is used to resist a path loss caused by an increase of the frequency band, to improve a coverage capability. From a perspective of an implementation of the base station, a large array is also used, and array weighting manners (that is, beamforming manners) used for different array scales in different frequency bands are different.

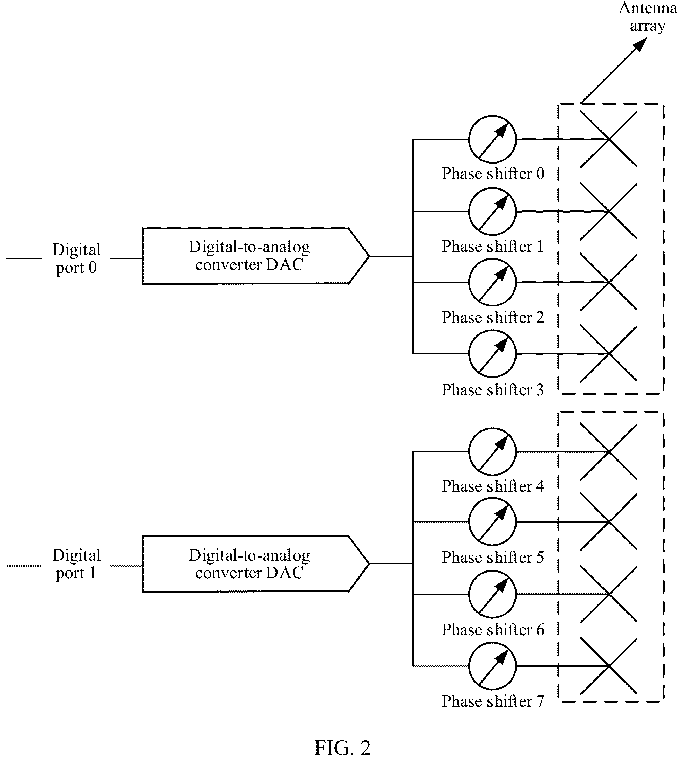

An HBF architecture includes a specific quantity of digital ports (or referred to as digital channels). One analog beam corresponds to one or more digital ports (or one digital port group). Each digital port may be connected to a plurality of elements by using a digital-to-analog converter (digital-to-analog converter, DAC). For example, one element includes one analog phase shifter and one or more antenna array elements connected to the analog phase shifter. For example, FIG. 2 shows that one digital-to-analog converter DAC corresponds to one digital port, one DAC corresponds to four elements, and one element includes one analog phase shifter and a dual-polarized antenna array element connected to the analog phase shifter.

A ratio relationship between the digital port and the analog phase shifter in the HBF architecture may be configured based on different frequencies and system design requirements. This is not limited in embodiments of this application. For example, in the communication system of the high frequency band, the quantity of digital ports in the HBF is small, and a quantity of analog phase shifters corresponding to a single digital port may be large. For example, generally, the quantity of digital ports in the HBF is configured as 4 to 16, and the quantity of analog phase shifters corresponding to the single digital port may be 16 to 512. In a communication system of a low frequency band, the quantity of digital ports in the HBF is large, and the quantity of analog phase shifters corresponding to the single digital port may be small. Generally, the quantity of digital ports in the HBF is configured as 32 to 128, and the quantity of analog phase shifters corresponding to the single digital port may be 3 to 16.

(3) Antenna port and port group

The antenna port is a logical concept, and is usually associated with a reference signal. For example, it may be considered that the antenna port is a transceiver interface on a channel through which the reference signal passes. The antenna port may alternatively be described as a reference signal port. In an HBF architecture, one antenna port may correspond to one or more elements (phase shifters).

The port group is a set including a plurality of antenna ports. In a possible design, a plurality of digital ports of a network device may be grouped to form a plurality of port groups. In a possible design, one reference signal resource (or CSI-RS resource) has a plurality of ports (or digital ports), and corresponds to one port group (or digital port group). A plurality of reference signal resources respectively correspond to a plurality of port groups. In a possible design, a plurality of reference signal resources correspond to one port group. In another possible design, for example, in the HBF architecture, the port group includes antenna ports corresponding to elements connected to a plurality of digital ports. The plurality of digital ports may be a plurality of digital ports corresponding to a same analog beam, and one port group corresponds to one analog beam. Alternatively, the plurality of digital ports may be digital ports corresponding to a plurality of analog beams, and one port group corresponds to a plurality of analog beams. For another example, in the HBF architecture, a plurality of digital ports corresponding to a same analog beam are divided into a plurality of subsets, each subset corresponds to one port group, one port group corresponds to one analog beam, and the port group includes an antenna port corresponding to an element connected to a digital port in the subset. Optionally, in the HBF architecture, the port group may alternatively be described as a digital-analog port group.

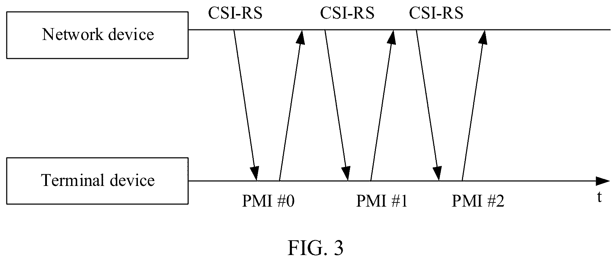

In the HBF architecture, when sending CSI-RSs, the network device selects different analog beams to send the CSI-RSs in a time-division manner, and the different analog beams correspond to different CSI-RS resources (or reference signal resources). Correspondingly, a terminal device measures, based on a plurality of resources, the CSI-RSs in a time-division manner and feeds back CSI. As shown in FIG. 3, after measuring a CSI-RS on a resource corresponding to an analog beam and feeding back CSI corresponding to the analog beam, the terminal device measures a CSI-RS on a resource corresponding to a next analog beam and feeds back CSI corresponding to the analog beam, and so on. In such a design, beam sweeping needs to be performed a plurality of times, and overheads are high. In addition, as the network device selects more analog beams, the terminal device needs to measure more CSI-RSs, and overheads for feeding back CSI are higher, increasing power consumption of the terminal device.

In view of this, embodiments of this application provide a precoding matrix transmission method. Correlation between channel information of a plurality of analog beams is considered, and joint compression and feedback of the channel information of the plurality of analog beams are performed, so that a network device does not need to select a plurality of analog beams to deliver a reference signal in a time-division manner, and a terminal device does not need to feed back CSI in a time-division manner, thereby reducing overheads for beam sweeping and channel feedback and reducing power consumption of the terminal device. The following further describes in detail the precoding matrix transmission method provided in embodiments of this application.

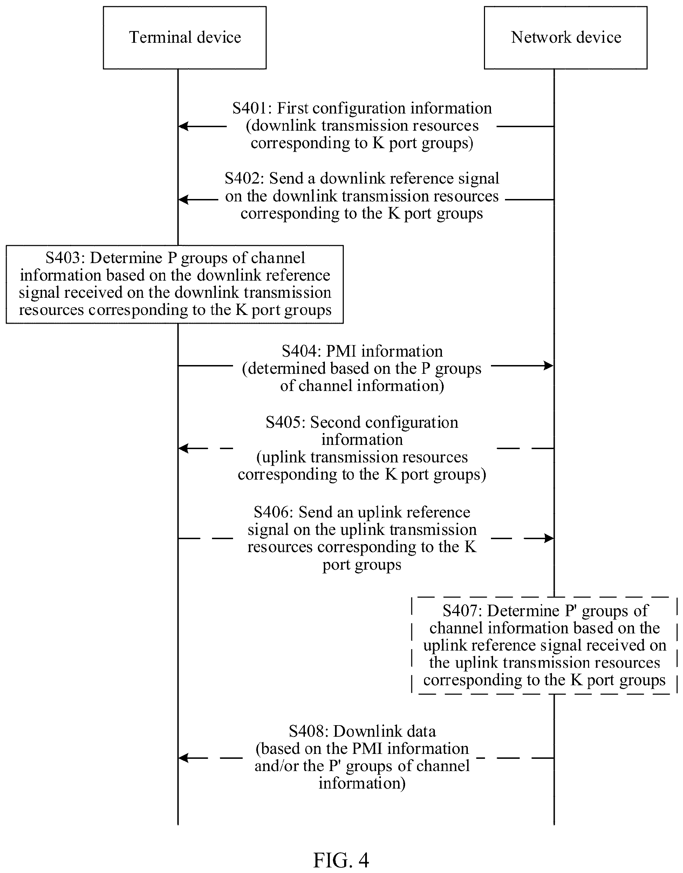

As shown in FIG. 4, the communication mainly includes the following steps. It may be understood that the steps and an execution sequence shown in FIG. 4 are merely used as examples. During actual implementation, some of the steps may be performed, or other steps may be performed. Similarly, the execution sequence of the steps may be adjusted. This is not limited in this embodiment of this application.

S401: A network device sends first configuration information to a terminal device.

The first configuration information is used to configure downlink transmission resources corresponding to K port groups. It may be understood that the downlink transmission resource is used for transmission of a downlink reference signal, and the downlink transmission resource includes one or more of the following: time domain resource, frequency domain resource, code domain resource, space domain resource, and transmission periodicity. Optionally, the first configuration information may further indicate a type of a downlink reference signal sent by the network device, for example, CSI-RS.

Optionally, in the radio access network RAN shown in FIG. 1B, S401 may be implemented as follows: A CU-CP corresponding to the network device generates the first configuration information, and sends the first configuration information to the terminal device via a DU and an RU. In an O-RAN system, S401 may be implemented as follows: An O-CU-CP corresponding to the network device generates the first configuration information, and sends the first configuration information to the terminal device via an O-DU and an O-RU.

In a possible design, each of the K port groups includes a plurality of antenna ports, and a plurality of antenna ports in one port group respectively correspond to downlink transmission resources. The first configuration information may include port group information corresponding to the K port groups and a downlink transmission resource corresponding to each antenna port.

The following describes in detail some implementations of the port group information corresponding to the K port groups.

In a first optional implementation, the port group information may indicate a value of K, and a quantity of antenna ports included in a $k^{th}$ port group in the K port groups is $P_{CSI-RS,k}$, where a value of k is a positive integer from 1 to K. If values of k are different, $P_{CSI-RS,k}$ may be the same or different. In addition, in an optional manner, if quantities of antenna ports included in the K port groups are the same, a quantity of antenna ports included in each of the K port groups may be represented as $P'_{CSI-RS}$.

In a second optional implementation, the port group information may be implemented by using code division multiplexing information of a reference signal. To be specific, the code division multiplexing information of the reference signal may not only indicate a code division multiplexing manner on a resource for the downlink reference signal, but also indicate a distribution manner of the K port groups.

The code division multiplexing manner includes frequency domain code division, time domain code division, and time-frequency domain code division. In this embodiment of this application, time-frequency domain code division is used as an example for description. The code division multiplexing information indicating time-frequency domain code division may be cdm#-FD#-TD#. "#" identifies a number, and indicates that, in one code division multiplexing (code division multiplexing, CDM) group, # ports are used for code division in frequency domain, and # ports are used for code division in time domain. For example, cdm4-FD2-TD2 indicates that one CDM group has four antenna ports, two of the four antenna ports are used for code division in frequency domain, and two of the four antenna ports are used for multiplexing in time domain. For example, a total quantity of antenna ports included in the K port groups is 16. The port group information in the first configuration information may include four CDM groups, that is, four pieces of code division multiplexing information cdm4-FD2-TD2. Four ports in each group occupy a same time-frequency resource, but are distinguished by using orthogonal codes. In addition, cdm4-FD2-TD2 may further indicate the distribution manner of the K port groups. "4" in cdm4 may indicate that K=4, to be specific, there are four port groups, "2" in FD2 may indicate that two of the four port groups are distributed in a vertical direction, and "2" in TD2 may indicate that two of the four port groups are distributed in a horizontal direction. Alternatively, "4" in cdm4 may indicate that K=4, to be specific, there are four port groups, "2" in FD2 may indicate that two of the four port groups are distributed in a horizontal direction, and "2" in TD2 may indicate that two of the four port groups are distributed in a vertical direction.

In a third optional implementation, the port group information may include a value of K and a total quantity of antenna ports, and quantities of antenna ports included in all the port groups are the same. Correspondingly, the terminal device may determine, based on the value of K and the total quantity of antenna ports, a quantity of antenna ports included in each of the K port groups.

Further, in addition to the foregoing three manners, the port group information may further include information indicating a division manner of antenna ports in each port group.

For example, the port group information includes a coefficient O1, indicating that all antenna ports corresponding to the K port groups are numbered, and every O1 consecutively numbered antenna ports correspond to one port group. For example, eight antenna ports are numbered 0 to 7. If O1=4, the antenna ports 0 to 3 correspond to a first port group, and the antenna ports 4 to 7 are a second port group.

For example, the port group information includes a sampling coefficient O2, indicating that antenna ports with numbers at an interval of O2 starting from a smallest number in all the antenna ports corresponding to the K port groups correspond to one port group. For example, eight antenna ports are numbered 0 to 7. If O2=4, {antenna port 0, antenna port 4} corresponds to one port group, {antenna port 1, antenna port 5} corresponds to one port group, {antenna port 2, antenna port 6} corresponds to one port group, and {antenna port 3, antenna port 7} corresponds to one port group.

For another example, the port group information includes information indicating even division, indicating that the antenna ports are evenly divided into the port groups in ascending order of numbers, that is, the port groups each include a same quantity of antenna ports. For example, in a scenario in which eight antenna ports are divided into two port groups, it is assumed that the eight antenna ports are numbered from p to p+7, and p is a constant configured by the network device or agreed on in a protocol. In this way, the antenna ports numbered p+0 to p+3 may be grouped into a port group 0, and the antenna ports numbered p+4 to p+7 may be grouped into a port group 1.

Optionally, the network device may configure, in the first configuration information with reference to the following manner, the downlink transmission resource corresponding to each antenna port: For example, the first configuration information is implemented as radio resource control (radio resource control, RRC) signaling, and the network device may configure, for the terminal device by using a resource configuration (resourceConfig) in the RRC signaling, the downlink transmission resources of all the antenna ports corresponding to the K port groups. For example, resourceConfig may include a resource set (resourceSet) corresponding to each of the K port groups, and a resource set corresponding to one port group may include an index (ID) of a resource (resource) of each antenna port in the port group.

In addition, optionally, the network device may further configure, for the terminal device by using the first configuration information, information for simulating more port groups. For example, the first configuration information is further used to configure Q groups of coefficients, the Q groups of coefficients are used by the terminal device to simulate Q port groups based on the K port groups, and Q is an integer greater than K. The Q groups of coefficients may also be described as Q groups of weighting coefficients, Q groups of coefficient vectors, or Q groups of coefficient matrices. The network device may further configure reporting content and a reporting manner of a measurement result of the downlink reference signal by using the first configuration information. The measurement result of the downlink reference signal may refer to channel information estimated based on the downlink reference signal, for example, CSI obtained through estimation based on a CSI-RS. Reporting content for the CSI may include feedback quantities such as an RI, a CQI, and a PMI. A reporting manner for the CSI may indicate reporting time, a reporting periodicity, a format of the reporting content, and a quantity of groups of reported channel information.

S402: The network device sends, based on the first configuration information, the downlink reference signal on the downlink transmission resources corresponding to the K port groups.

Specifically, the network device may send, based on the first configuration information described in S401, the downlink reference signal, for example, a CSI-RS, on the downlink transmission resources corresponding to the K port groups. Optionally, in the radio access network RAN shown in FIG. 1B, S403 may be implemented as follows: The DU corresponding to the network device sends the downlink reference signal to the terminal device via the RU. In the O-RAN system, S403 may be implemented as follows: The O-DU corresponding to the network device sends the downlink reference signal to the terminal device via the O-RU.

S403: The terminal device determines P groups of channel information based on the downlink reference signal received on the downlink transmission resources corresponding to the K port groups.

Specifically, the terminal device may measure, based on the first configuration information, the reference signal received on the downlink transmission resources corresponding to the K ports, to obtain K groups of channel information. The K groups of channel information respectively correspond to the K port groups. For example, the K groups of channel information are in one-to-one correspondence with the K port groups.

In an optional implementation, when K is greater than 1, the P groups of channel information may be at least two groups of channel information in the K groups of channel information. In other words, P is an integer less than or equal to K but greater than 1. In another optional implementation, as described in S401, if the Q groups of coefficients are configured in the first configuration information, the terminal device may determine Q groups of channel information based on the Q groups of coefficients and the K groups of channel information, and further determine to report at least two groups of channel information in the Q groups of channel information. In other words, the P groups of channel information may be the at least two groups of channel information in the Q groups of channel information, and P is an integer less than or equal to Q but greater than 1.

For example, channel information of the K port groups is denoted as $A_0$, $A_1$, ... , $A_{K-1}$. A dimension of $A_k$ is $N_{UE} \times P_{CSI-RS,k}$, where $N_{UE}$ is a quantity of receive antenna ports of the terminal device. The Q groups of coefficients are numbered from 0 to Q-1, m is an integer from 0 to Q-1, and a group of coefficients numbered m may be represented as $\varphi_m = [\varphi_{m,0}, \varphi_{m,1}, ..., \varphi_{m,K-1}]$. In view of this, a group of channel information numbered m in the Q groups of channel information may be represented as $H_m = \sum_{k=0}^{K-1} \varphi_{m,k} A_k$. Such a design is applied to an HBF architecture, so that the network device can send fewer reference signals, and the terminal device simulates more channel information based on weighting coefficients corresponding to the port groups, to reduce communication overheads. Optionally, the design may also be applied to a digital beamforming architecture and an analog beamforming architecture.

In an implementation, the Q groups of coefficients form a matrix (for example, each row represents a group of coefficients; or each column represents a group of coefficients). Further, the matrix may be a discrete Fourier transform (discrete Fourier transform, DFT) matrix, a Hadamard matrix, a Walsh matrix, an identity matrix, or any other unitary matrix.

In an implementation, a value of P is one of 1, 2, 4, 6 and 8.

In an implementation, a value of P is determined based on Q. For example, P=Q.

In an implementation, the P groups of channel information are determined based on index set information corresponding to the channel information, and the index set information indicates indexes of the P groups of channel information in the Q groups of channel information. For example, the index set information includes a group index set $\{i_0, i_1, ... , i_{P-1}\}$ corresponding to the P groups of channel information. When the P groups of channel information are selected from the K groups of channel information, $0 \leq i_p < K$, where $i_p$ is an integer. When the P groups of channel information are selected from the Q groups of channel information, $0 \leq i_p < Q$, where $i_p$ is an integer; and p is an integer from 0 to P-1.

In addition, it may be understood that the P groups of channel information are to-be-reported (fed-back) channel information. Optionally, the value of P (or the corresponding group index set) may be determined by the terminal device, and the terminal device may report the determined value of P (or corresponding group index set) to the network device. Alternatively, the value of P (or the corresponding group index set) may be indicated by the network device to the terminal device. For example, the network device may indicate the value of P (or the corresponding group index set) in the first configuration information. Specifically, the value of P (or the corresponding group index set) may be a quantity of the reported channel information included in the first configuration information described in S402.

S404: The terminal device sends PMI information to the network device based on the P groups of channel information.

Each of the P groups of channel information may be represented by v precoding matrices, or may be understood as that each of the P groups of channel information corresponds to v precoding matrices. v is a positive integer. For example, v is a rank value, a quantity of layers, or a quantity of streams. The terminal device may determine and send the PMI information based on the P groups of channel information. Correspondingly, the network device may also determine the v precoding matrices for each of the P groups of channel information based on the received PMI information, and further determine the P groups of channel information.

Specifically, the PMI information indicates v groups of parameters, and any one of the v groups of parameters includes at least one first parameter. In the any one of the v groups of parameters, the at least one first parameter corresponds to (is in one-to-one correspondence with) at least one of the P groups of channel information. Optionally, the any one of the v groups of parameters further includes one or more of the following parameters: second parameter $W_1$, third parameter $W_f^H$, and fourth parameter $\tilde{W}_2$. It may be understood that, in the any one of the v groups of parameters, different channel information corresponds to different first parameters, but the different channel information corresponds to the same second parameter $W_1$, same third parameter $W_f^H$, or same fourth parameter $\tilde{W}_2$. In addition, in a possible implementation, it may also be understood as that any one of the v groups of parameters includes at least one first parameter, and optionally, further includes a common parameter combination corresponding to the P groups of channel information. In the any one of the v groups of parameters, different channel information corresponds to different first parameters, but the P groups of channel information correspond to a same common parameter combination. The common parameter combination corresponding to the P groups of channel information may include one or more of the following

parameters: second parameter $W_1$, third parameter $W_f^H$, and fourth parameter $\tilde{W}_2$.

The PMI information may be used to determine v groups of precoding matrices, and any one of the v groups of precoding matrices includes a precoding matrix corresponding to each of the P groups of channel information. In the following descriptions of this embodiment of this application, a number $l$ represents one of the v groups of precoding matrices, and a number $p$ represents one of the P groups of channel information. $p$ is an integer less than or equal to P. For example, if the P groups of channel information are numbered starting from 0, $p$ is an integer from 0 to P-1. For another example, if the P groups of channel information are numbered starting from 1, $p$ is an integer from 1 to P. Similarly, $l$ is an integer less than or equal to v. For example, if the v groups of parameters (or v layers and v streams) are numbered starting from 0, $l$ is an integer from 0 to v-1. For another example, if the v groups of parameters are numbered starting from 1, $l$ is an integer from 1 to v. Different values of $p$ correspond to different $A_{p,l}$.

Optionally, a precoding matrix $W$ numbered $p$ in a group of precoding matrices numbered $l$ in the v groups of precoding matrices satisfies the following relational expression (1) or relational expression (2):

$$W = W_1 \times A_{p,l} \times \tilde{W}_2 \times W_f^H \ (1);$$

or

$$W = A_{p,l} \times W_1 \times \tilde{W}_2 \times W_f^H \ (2).$$

In the relational expression (1) or relational expression (2), if the PMI information includes a first parameter that corresponds to a group of channel information numbered $p$ in the P groups of channel information and that is included in a group of parameters numbered $l$ in the v groups of parameters, $A_{p,l}$ represents the first parameter. If the PMI information does not include a first parameter that corresponds to a group of channel information numbered $p$ in the P groups of channel information and that is included in a group of parameters numbered $l$ in the v groups of parameters, $A_{p,l}$ represents a preset matrix, for example, an identity matrix. Dimensions of $W_1$, $A_{p,l}$, $\tilde{W}_2$, and $W_f^H$ are determined based on at least one parameter in a codebook parameter combination. The codebook parameter combination includes one or more of the following parameters: quantity L of beams (or referred to as quantity L of ports or quantity L of bases), factor $p_\upsilon$ of a quantity of vectors (or referred to as factor $p_\upsilon$ of a quantity of bases or IDFT base selection ratio $p_\upsilon$), and factor $\beta$ of a quantity of non-zero elements (or referred to as non-zero element ratio $\beta$). IDFT is an inverse discrete Fourier transform (inverse discrete Fourier transform, IDFT) matrix. In a possible design, the codebook parameter combination is indicated by the network device to the terminal device, or the codebook parameter combination is preconfigured. A value of the at least one parameter in the codebook parameter combination is determined based on the value of P. The quantity L of beams may alternatively be described as L(P), and L(P) is a function relationship, indicating that a value of L is related to the value of P. Similarly, the factor $p_\upsilon$ of the quantity of vectors may alternatively be described as $p_\upsilon(P)$, and the factor $\beta$ of the quantity of non-zero elements may alternatively be described as $\beta(P)$.

In an optional implementation of the relational expression (1), a dimension of W is $P_{\text{CSI-RS}} \times N_3$; a dimension of $W_1$ is $P_{\text{CSI-RS}} \times 2L(P)$; a dimension of $A_{p,l}$ is $2L(P) \times 2L(P)$, and a dimension of $\tilde{W}_2 \times W_f^H$ is $2L(P) \times N_3$; a dimension of $\tilde{W}_2$ is $2L(P) \times M(P)$; and a dimension of $W_f^H$ is $M(P) \times N_3$, and may be a row M(P) in an IDFT matrix (or a DFT matrix) whose dimension is $N_3(P) \times N_3(P)$, or may be referred to as a conjugate of a column M(P) in a DFT matrix $W_f$ whose dimension is $N_3(P) \times N_3(P)$. $P_{\text{CSI-RS}}$ is a quantity of antenna ports corresponding to each of the P groups of channel information, and $N_3$ is a quantity of subbands corresponding to each of the P groups of channel information. M(P) is a quantity of selected IDFT base vectors, and $M(P) = \left\lceil p_\upsilon(P) \times \frac{N_3}{R} \right\rceil$, where R represents a quantity of precoding matrices of each subband.

In an optional implementation of the relational expression (2), a dimension of W is $P_{\text{CSI-RS}} \times N_3$; a dimension of $A_{p,l}$ is $P_{\text{CSI-RS}} \times P_{\text{CSI-RS}}$, a dimension of $W_1$ is $P_{\text{CSI-RS}} \times 2L(P)$, and a dimension of $\tilde{W}_2 \times W_f^H$ is $2L(P) \times N_3$; a dimension of $\tilde{W}_2$ is $2L(P) \times M(P)$; and a dimension of $W_f^H$ is $M(P) \times N_3$, and may be a row M(P) in an IDFT matrix (or a DFT matrix) whose dimension is $N_3 \times N_3$, or may be referred to as a conjugate of a column M(P) in a DFT matrix $W_f$ whose dimension is $N_3 \times N_3$. $P_{\text{CSI-RS}}$ is a quantity of antenna ports corresponding to each of the P groups of channel information, and $N_3$ is a quantity of subbands corresponding to each of the P groups of channel information. M(P) is a quantity of selected IDFT base vectors, and $M(P) = \left\lceil p_\upsilon(P) \times \frac{N_3}{R} \right\rceil$, where R represents a quantity of precoding matrices of each subband.

In addition, optionally, in this embodiment of this application, $W_1$ may alternatively be a column 2L(P) in an oversampling DFT (or IDFT) matrix whose dimension is $P_{\text{CSI-RS}} \times O \times P_{\text{CSI-RS}}$. O is an oversampling factor; or $W_1$ may be

a column 2L(P) in an identity matrix whose dimension is $P_{CSI-RS} \times P_{CSI-RS}$.

In this embodiment of this application, $\tilde{W}_2$ may be further represented by a plurality of amplitude coefficients and/or phase parameters. For example, $\tilde{W}_2$ may be represented by a plurality of quantized amplitude coefficients and quantized phase parameters. Optionally, each quantized amplitude coefficient may be represented by two parameters. For example, a 1st parameter corresponds to an inter-polarization amplitude coefficient ratio, and a 2nd parameter corresponds to intra-polarization relative amplitude. In a possible design, for the group of parameters numbered $l$ in the v groups of parameters, the terminal device may indicate, in the PMI information, first parameters $A_{0,l}$, $A_{1,l}$, ... , $A_{P-1,l}$ respectively corresponding to the P groups of channel information and the common parameter combination ($W_1$, $W_f^H$, and $\tilde{W}_2$) corresponding to all the P groups of channel information. For example, when finally feeding back channel information, the terminal device needs to feed back only port or DFT codebook information related to $W_1$, IDFT base selection information related to $W_f^H$, and a non-zero element (for example, location information of the non-zero element, and amplitude and a phase of the non-zero element) in $\tilde{W}_2$. To be specific, for the group of parameters numbered $l$ in the v groups of parameters, the terminal device may include, in the PMI information, the port or DFT codebook information related to $W_1$, the IDFT base selection information related to $W_f^H$, and the non-zero element in $\tilde{W}_2$.

In another possible design, different groups of parameters in the v groups of parameters may include same $W_1$ and same $W_f^H$, and the different groups of parameters in the v groups of parameters include different $\tilde{W}_2$. In view of this, the PMI information sent by the terminal device may indicate a group of $W_1$ and $W_f^H$, and for the group of parameters numbered $l$ in the v groups of parameters, the terminal device may indicate, in the PMI information, first parameters $A_{0,l}$, $A_{1,l}$, ... , $A_{P-1,l}$ respectively corresponding to the P groups of channel information and $\tilde{W}_2$ corresponding to all the P groups of channel information. For example, when channel information is finally fed back, the PMI information sent by the terminal device may include information related to a group of $W_1$ and $W_f^H$, for example, port or DFT codebook information related to $W_1$, and IDFT base selection information related to $W_f^H$; and a non-zero element of each $\tilde{W}_2$ in v $\tilde{W}_2$ included in the PMI information.

Optionally, when values of $p$ are the same, different values of $l$ may correspond to same $A_{p,l}$. In this scenario, $A_{p,l}$ may alternatively be described as $A_p$, and the terminal device indicates a group of $A_0$, $A_1$, ... , $A_{P-1}$ in the PMI information. In this embodiment of this application, the following uses $A_{p,l}$ as an example to describe in detail an implementation of indicating $A_{p,l}$ in the PMI information.

In an optional implementation, $A_{p,l}$ (for example, the first parameter) is determined based on F coefficients, and F is an integer greater than 1. In the relational expression (1), a value of F is determined based on the value of P, where for example, F is 2L(P). Alternatively, in the relational expression (2), a value of F is determined based on a quantity of antenna ports included in one of the K port groups, where for example, F is $P_{CSI-RS}$. The terminal device indicates, in the PMI information, a part or all of the F coefficients corresponding to $A_{p,l}$. For an implementation of the F coefficients, refer to the following Manner Al to Manner A3 for implementation.

Manner A1: The F coefficients are divided into (include) a first part of coefficients and a second part of coefficients.

In a possible design, the first part of coefficients are the same as the second part of coefficients, and the PMI information indicates the first part of coefficients or the second part of coefficients. For example, the PMI information indicates the first part of coefficients. The terminal device includes the first part of coefficients in the PMI information, or includes quantization information of the first part of coefficients in the PMI information.

For example, $A_{p,l}$ may be a block diagonal matrix, where for example, $A_{p,l} = \begin{bmatrix} B_{p,l} & 0 \\ 0 & B_{p,l} \end{bmatrix}$. The first part of coefficients may be in one-to-one correspondence with an element in a first diagonal block $B_{p,l}$ on the upper left of the matrix, or the first part of coefficients may be in one-to-one correspondence with an element in a second diagonal block $B_{p,l}$ on the lower left of the matrix. It may be understood that, when F is 2L(P), a dimension of $B_{p,l}$ is determined based on L in the codebook parameter combination, where for example, L is related to P; and $B_{p,l}$ is a matrix of $L(P) \times L(P)$. When F is $P_{CSI-RS}$, $B_{p,l}$ is a matrix whose dimension is $\frac{P_{CSI-RS}}{2} \times \frac{P_{CSI-RS}}{2}$. In such a design, a similarity between different polarizations in a same port group is used, and a same coefficient ($B_{p,l}$) is used for the different polarizations, to reduce feedback overheads.

For example, $A_{p,l}$ may be a diagonal matrix. For example, in the relational expression (1), $A_{p,l} = diag(a_{p,l,0}, a_{p,l,1}, ... , a_{p,l,L(P)-1}, a_{p,l,0}, a_{p,l,1}, ... , a_{p,l,L(P)-1})$, the first part of coefficients may be first L(P) non-zero elements in $A_{p,l}$, and the second part of coefficients may be last L(P) non-zero elements in $A_{p,l}$. For another example, in the relational expression (2),

$$A_{p,l} = diag\left(a_{p,l,0}, a_{p,l,1}, ... , a_{p,l,\frac{P_{CSI-RS}}{2}-1}, a_{p,l,0}, a_{p,l,1}, ... , a_{p,l,\frac{P_{CSI-RS}}{2}-1}\right)$$

, the first part of coefficients may be first $\frac{P_{CSI-RS}}{2}$ non-zero elements in $A_{p,l}$, and the second part of coefficients may be last $\frac{P_{CSI-RS}}{2}$ non-zero elements in $A_{p,l}$.

Such a design may be applied to a scenario in which in a same port group, different ports are orthogonal and different polarizations are similar. A same coefficient is used for the different polarizations, to reduce feedback overheads.

In another possible design, the second part of coefficients are determined based on a first coefficient and the first part of coefficients, and the PMI information indicates the first part of coefficients and the first coefficient. For example, the terminal device includes the first part of coefficients or quantization information of the first part of coefficients in the PMI information, and includes the first coefficient or quantization information of the first coefficient in the PMI information.

For example, $A_{p,l}$ may be a block diagonal matrix, where for example, $A_{p,l} = \begin{bmatrix} B_{p,l} & 0 \\ 0 & \delta_{p,l} \times B_{p,l} \end{bmatrix}$. A first diagonal block is $B_{p,l}$, a second diagonal block is $\delta_{p,l} \times B_{p,l}$, $\delta_{p,l}$ represents a first coefficient corresponding to $A_{p,l}$, $\delta_{p,l}$ is a complex number, and a modulus of $\delta_{p,l}$ is 1, that is, $|\delta_{p,l}| = 1$. The first part of coefficients may be in one-to-one correspondence with an element in the first diagonal block $B_{p,l}$, or the first part of coefficients may be in one-to-one correspondence with an element in the second diagonal block $\delta_{p,l} \times B_{p,l}$. It may be understood that, when F is 2L(P), a dimension of $B_{p,l}$ is determined based on L in the codebook parameter combination, where for example, L is related to P;

and $B_{p,l}$ is a matrix of $L(P) \times L(P)$. When F is $P_{CSI-RS}$, $B_{p,l}$ is a matrix whose dimension is $\frac{P_{CSI-RS}}{2} \times \frac{P_{CSI-RS}}{2}$. In such a design, a difference between different polarizations is considered, and the first coefficient is introduced to simulate the difference between the different polarizations, to reduce feedback overheads.

For example, $A_{p,l}$ may be a diagonal matrix. For example, in the relational expression (1), $A_{p,l}$ = $diag(a_{p,l,0}, a_{p,l,1}, ... , a_{p,l,L(P)-1}, \delta_{p,l} \times a_{p,l,0}, \delta_{p,l} \times a_{p,l,1}, ... , \delta_{p,l} \times a_{p,l,L(P)-1})$, the first part of coefficients may be first L(P) non-zero elements in $A_{p,l}$, and the second part of coefficients may be last L(P) non-zero elements in $A_{p,l}$. For another example, in the relational expression (2),

$$A_{p,l} = diag\left(a_{p,l,0}, a_{p,l,1}, ..., a_{p,l,\frac{P_{CSI-RS}}{2}-1}, \delta_{p,l} \times a_{p,l,0}, \delta_{p,l} \times a_{p,l,1}, ..., \delta_{p,l} \times a_{p,l,\frac{P_{CSI-RS}}{2}-1}\right)$$, the first part of coefficients may be first $\frac{P_{CSI-RS}}{2}$ non-zero elements in $A_{p,l}$, and the second part of coefficients may be last $\frac{P_{CSI-RS}}{2}$ non-zero elements in $A_{p,l}$. Such a design may be applied to a scenario in which in a same port group, different ports are orthogonal, different ports in a same polarization are similar, and different polarizations are different, to reduce feedback overheads.

Manner A2: A value of one of the F coefficients is one of J values, and the PMI information indicates the J values.

In a possible design, J is equal to F, to be specific, values of the F coefficients are different from each other, and the PMI may include the F coefficients or quantization information of the F coefficients. For example, $A_{p,l}$ is a diagonal matrix, and the F coefficients are non-zero elements in the diagonal matrix. In the relational expression (1), F=2L(P), and $A_{p,l}$ = $diag(a_{p,l,0}, a_{p,l,1}, ... , a_{p,l,2L(P)-1})$; or in the relational expression (2), F= $P_{CSI-RS}$, and $A_{p,l}$=$diag(a_{p,l,0}, a_{p,l,1}, ..., a_{p,l,PCSI-RS-1})$. Such a design may be used for a scenario in which in a same port group, different polarizations are not similar, where for example, different ports are orthogonal, to reduce feedback overheads.

In another possible design, J is less than F, to be specific, values of at least two of the F coefficients are the same. Optionally, J corresponds to a quantity of sub port groups included in one port group, to be specific, antenna ports in one port group are divided into J sub port groups, and the J values are in one-to-one correspondence with the J sub port groups. For example, $A_{p,l}$ is a diagonal matrix, and the F coefficients are non-zero elements in the diagonal matrix. In the relational expression (1), F=2L(P), L(P)=4, and J is 4; or in the relational expression (2), F=$P_{CSI-RS}$, $P_{CSI-RS}$ =4, and J is 4. The J values include $a_{p,l,0}$, $a_{p,l,1}$, $a_{p,l,2}$, and $a_{p,l,3}$, and $A_{p,l}$ = $diag(a_{p,l,0}, a_{p,l,0}, a_{p,l,1}, a_{p,l,1}, a_{p,l,2}, a_{p,l,2}, a_{p,l,3}, a_{p,l,3})$. For another example, $A_{p,l}$ is a diagonal matrix, and the F coefficients are non-zero elements in the diagonal matrix. In the relational expression (1), F=2L(P), L(P)=4, and J is 2; or in the relational expression (2), F=$P_{CSI-RS}$, $P_{CSI-RS}$=4, and J is 2. The J values are $a_{p,l,0}$ and $a_{p,l,1}$, and $A_{p,l}$ = $diag(a_{p,l,0}, a_{p,l,0}, a_{p,l,1}, a_{p,l,1}, a_{p,l,0}, a_{p,l,0}, a_{p,l,1}, a_{p,l,1})$. Such a design may be used for a scenario in which in a same port group, different ports are orthogonal, and ports in a sub port group are similar, to reduce a quantity of feedback coefficients, thereby reducing feedback overheads.

Manner A3: The F coefficients include a first part of coefficients and a second part of coefficients, a value of a coefficient in the first part of coefficients is one of J values, the second part of coefficients are determined based on a second coefficient and the first part of coefficients, and the PMI information includes the J values and the second coefficient (for example, $\delta_{p,l}$), where J is a positive integer less than F.

Optionally, J corresponds to a quantity of sub port groups included in one port group, to be specific, antenna ports in one port group are divided into J sub port groups, and the J values are in one-to-one correspondence with the J sub port groups. Optionally, $A_{p,l}$ is a diagonal matrix. The diagonal matrix includes a first part of non-zero elements and a second part of non-zero elements. The first part of non-zero elements are in one-to-one correspondence with the first part of coefficients, and the second part of non-zero elements are in one-to-one correspondence with the second part of coefficients. In the relational expression (1), a quantity of the first part of non-zero elements is L(P); or in the relational expression (2), a quantity of the first part of non-zero elements is $\frac{P_{CSI-RS}}{2}$. For example, the quantity of the first part of non-zero elements is 4, J is 4, and the J values include $a_{p,l,0}$, $a_{p,l,1}$, $a_{p,l,2}$, and $a_{p,l,3}$, and $A_{p,l}$ = diag($a_{p,l,0}$, $\delta_{p,l}a_{p,l,0}$, $a_{p,l,1}$, $\delta_{p,l} \times a_{p,l,1}$, $a_{p,l,2}$, $\delta_{p,l} \times a_{p,l,2}$, $a_{p,l,3}$, $\delta_{p,l} \times a_{p,l,3}$). For another example, the quantity of the first part of non-zero elements is 4, J is 2, and the J values include $a_{p,l,0}$ and $a_{p,l,1}$, and $A_{p,l}$ = diag($a_{p,l,0}$, $a_{p,l,0}$, $a_{p,l,1}$, $a_{p,l,1}$, $\delta_{p,l} \times a_{p,l,0}$, $\delta_{p,l}a_{p,l,0}$, $\delta_{p,l} \times a_{p,l,1}$, $\delta_{p,l} \times a_{p,l,1}$). Such a design may be used for a scenario in which in a same port group, different ports are orthogonal, ports in a sub port group are similar, and different polarizations are different, to reduce a quantity of feedback coefficients, thereby reducing feedback overheads.

In another optional implementation, for the group of parameters numbered *l* in the v groups of parameters, $A_{p,l}$ may be the preset matrix. For example, in the relational expression (1), $A_{p,l}$ is an identity matrix (*I*) of 2L(P) $\times$ 2L(P) . For another example, in the relational expression (2), $A_{p,l}$ is an identity matrix (*I*) of $P_{CSI\text{-}RS} \times P_{CSI\text{-}RS}$. In this case, the terminal device may not need to feed back $A_{p,l}$. Further, a value of an index *p* corresponding to $A_{p,l}$ is preset, configured by the network device, or determined by the terminal device and then reported to the network device.

Optionally, the foregoing plurality of implementations may be used independently or in combination. Based on the foregoing implementations, an example in which quantization information of $a_{p,l,0}$ is included in the PMI information is used. It may be understood that the quantization information of $a_{p,l,0}$ is information obtained by performing amplitude and/or phase quantization processing on $a_{p,l,0}$. In a possible design, quantized amplitude of $a_{p,l,0}$ is indicated by k0 bits, and a quantized phase of $a_{p,l,0}$ is indicated by k1 bits. For example, k0=2, and k1=2; k0=2, and k1=3; k0=2, and k1=4; k0=3, and k1=3; k0=3, and k1=4; k0=3, and k1=2; k0=4, and k1=2; k0=4, and k1=3; or k0=4, and k1=4. In an implementation, different elements correspond to different k0 and different k1. For example, amplitude and phase quantization lengths corresponding to first $\frac{L(P)}{2}$ elements with high energy in $A_{p,l}$ are configured as that k0=4 and k1=3, and amplitude and phase quantization lengths corresponding to another element are configured as that k0=2 and k1=2. In such a differentiated design, a large quantization length is designed for information about the element with high energy, to reduce feedback overheads and ensure good performance.

In addition, in an implementation, v=1, and $W = \begin{bmatrix} \widetilde{w}_{0,0} \\ \widetilde{w}_{1,0} \end{bmatrix}$ ; v=2, and $W = \begin{bmatrix} \widetilde{w}_{0,0} & \widetilde{w}_{0,1} \\ \widetilde{w}_{1,0} & \widetilde{w}_{1,1} \end{bmatrix}$ ; or v>2, and

$$W = \begin{bmatrix} \widetilde{w}_{0,0} & \widetilde{w}_{0,1} & \cdots & \widetilde{w}_{0,v-1} \\ \widetilde{w}_{1,0} & \widetilde{w}_{1,1} & \cdots & \widetilde{w}_{1,v-1} \end{bmatrix}.$$

Specifically, in a first case, $\widetilde{w}_{r,l} = \frac{1}{J} \cdot \sum_{i=0}^{L(P)-1} b_{m_1^{(i)} m_2^{(i)}} p_{l,r}^{(1)} \sum_{f=0}^{M(P)-1} y_{t,l}^{(f)} p_{l,i+rL(P),f}^{(2)} \varphi_{l,i+L(P),f}$ , where $b_{m_1^{(i)} m_2^{(i)}} = d_{m_1^{(i)}} \otimes d_{m_2^{(i)}}$ ; $d_k$ represents a kth DFT vector (or IDFT vector); $\otimes$ represents a Kronecker product (Kronecker Product); $y_{t,l}^{(f)} = e^{j \frac{2\pi t n_{3,l}^{(f)}}{N_3}}$ ; $t \in \{0, 1, \ldots, N_3 - 1\}$; $r \in \{0, 1\}$; $l \in \{0, 1, \ldots, v - 1\}$; $f \in \{0, 1, \ldots, M(P) - 1\}$; $\varphi_{l,i+L(P),f}$ corresponds to a phase factor; $p_{l,r}^{(1)}$ and $p_{l,i+rL(P),f}^{(2)}$ correspond to amplitude factors; and *J* is a power normalization factor, causing $\|W\| = 1$.

In a second case, $\widetilde{w}_{r,l} = \frac{1}{J} \cdot \sum_{i=0}^{L(P)-1} b_m p_{l,r}^{(1)} \sum_{f=0}^{M(P)-1} y_{t,l}^{(f)} p_{l,i+rL(P),f}^{(2)} \varphi_{l,i+L(P),f}$, where an *m*[th] element of $b_m$ is 1; and another element is 0.

The foregoing two calculation manners of $\widetilde{w}_{r,l}$ respectively correspond to the relational expressions (1) and (2). For example, the relational expression (2) corresponds to the first case, and the relational expression (1) corresponds to the second case.

In a third case, $\widetilde{w}_{r,l} = \frac{1}{J} \cdot \sum_{i=0}^{L(P)-1} a_{p,l,i+rL(P)} b_{m_1^{(i)} m_2^{(i)}} p_{l,r}^{(1)} \sum_{f=0}^{M(P)-1} y_{t,l}^{(f)} p_{l,i+rL(P),f}^{(2)} \varphi_{l,i+L(P),f}$ , where $b_{m_1^{(i)} m_2^{(i)}} = d_{m_1^{(i)}} \otimes d_{m_2^{(i)}}$ ; $d_k$ represents a kth DFT vector (or IDFT vector); $\otimes$ represents a Kronecker product (Kronecker Product); $y_{t,l}^{(f)} = e^{j \frac{2\pi t n_{3,l}^{(f)}}{N_3}}$ ; $t \in \{0, 1, \ldots, N_3 - 1\}$ ; $l \in \{0, 1, \ldots, v - 1\}$ ; $f \in \{0, 1, \ldots, M(P) - 1\}$ ; $\varphi_{l,i+L(P),f}$ corresponds to a phase factor; $p_{l,r}^{(1)}$ and $p_{l,i+rL(P),f}^{(2)}$ correspond to amplitude factors; *J* is a power normalization factor, causing $\|W\| = 1$; and $a_{p,l,i+rL(P)}$ represents a coefficient (that is, the first parameter) of a *p*[th] group of channel information (or a precoding matrix corresponding to the *p*[th] group of channel information). Optionally, $a_{p,l,i+rL(P)}$ is a complex number.

In a fourth case, $\widetilde{w}_{r,l} = \frac{1}{J} \cdot \sum_{i=0}^{L(P)-1} a_{p,l,i+rL(P)} b_m p_{l,r}^{(1)} \sum_{f=0}^{M(P)-1} y_{t,l}^{(f)} p_{l,i+rL(P),f}^{(2)} \varphi_{l,i+L(P),f}$ , where an *m*[th] element of $b_m$ is 1; and another element is 0.

Further, the foregoing two different manners respectively correspond to the relational expressions (1) and (2). For example, the relational expression (2) corresponds to the third case, and the relational expression (1) corresponds to the fourth case. It should be understood that, in this embodiment of this application, each parameter in a form of a matrix (or a vector) may finally include a plurality of quantized coefficients (or coefficients represented based on indexes). A difference between the two different manners lies only in expression or representation form.

In addition, it may be understood that the network device may configure a feedback manner of the PMI information for the terminal device, for example, content included in the PMI information; or the terminal device may determine a feedback manner of the PMI information, and report the corresponding feedback manner to the network device. Optionally, the network device may further configure a sorting sequence of $A_{p,l}$, $p = 0, 1, ..., P - 1$, and $l = 1, ..., \upsilon$. The terminal device may determine a specific sorting sequence based on a configuration of the network device, and jointly compress precoding matrices of the P groups of channel information. Alternatively, the terminal device may determine a sorting sequence, and report the corresponding sorting sequence to the network device. Alternatively, the terminal device or the network device may sort precoding matrices of the P groups of channel information in ascending order based on index values of port groups. Alternatively, the terminal device sorts precoding matrices of the P groups of channel information, and reports an index of a port group corresponding to each precoding matrix. Alternatively, the network device configures a plurality of candidate sorting manners, and the terminal device selects one of the plurality of candidate sorting manners to sort precoding matrices of the P groups of channel information and reports the selected sorting manner to the network device.

The following describes in detail, by using Table 1 to Table 5, a value range of the parameter in the codebook parameter set provided in this embodiment of this application. It may be understood that, during actual use of Table 1 to Table 5, one or more rows, all rows in the table, or more rows than those shown in the table may be used. The following Table 1 to Table 5 are used as examples, and do not indicate that descriptions of the codebook parameter set in this embodiment of this application are limited to such examples.

Table 1

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 1 | L1(P) | X1(P) | Y1(P) | Z1(P) |
| 2 | L2(P) | X2 (P) | Y2 (P) | Z2(P) |
| 3 | L3(P) | X3 (P) | Y3 (P) | Z3(P) |
| 4 | L4(P) | X4(P) | Y4(P) | Z4(P) |
| 5 | L5(P) | X5 (P) | Y5 (P) | Z5(P) |
| 6 | L6(P) | X6(P) | Y6(P) | Z6(P) |
| 7 | L7(P) | X7(P) | Y7(P) | Z7(P) |
| 8 | L8(P) | X8(P) | Y8(P) | Z8(P) |

Table 1 shows that the value of the at least one parameter in the codebook parameter set is determined based on the value of P. The foregoing Lr(P) is a positive integer, where for example, L1(P) = 2, 4, 6, 8, 10, 12, 16, P, 2P, 3P, 4P, 5P, 6P, 7P, or 8P; and r = 1, 2, ... , 8. The foregoing Xr(P), Yr(P), or Zr(P) is a non-negative real number, and is less than 1. For example, Xr(P), Yr(P), or Zr(P) is less than or equal to 1/2. Xr(P) is used as an example: Xr(P) = 1/2, 1/4, 1/6, 1/8, 1/10, 1/12, 1/16, 1/P, 1/2P, 1/3P, 1/4P, 1/5P, 1/6P, 1/7P, or 1/8P. 2P is used as an example, where 2P is a product of 2 and P. For descriptions of other content with a same format in Table 1 to Table 5, refer to the definition of 2P for understanding. Details are not described again in this embodiment of this application.

Table 2

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 1 | 2P | 1/4 | 1/8 | 1/4 |
| 2 | 2P | 1/4 | 1/8 | 1/4 |
| 3 | 4P | 1/4 | 1/8 | 1/4 |
| 4 | 4P | 1/4 | 1/8 | 1/2 |

(continued)

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 5 | 4P | 1/4 | 1/4 | ¾ |
| 6 | 4P | 1/2 | 1/4 | ½ |
| 7 | 6P | 1/4 | - | ½ |
| 8 | 6P | 1/4 | - | 3/4 |

Table 2 shows that a value of the parameter $L$ in the codebook parameter set is determined based on the value of P.

Table 3

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 1 | 2 | 1/4 | 1/8 | 1/4P |
| 2 | 2 | 1/4 | 1/8 | 1/2P |
| 3 | 4 | 1/4 | 1/8 | 1/4P |
| 4 | 4 | 1/4 | 1/8 | 1/2P |
| 5 | 4 | 1/4 | 1/4 | 3/4P |
| 6 | 4 | 1/2 | 1/4 | 1/2P |
| 7 | 6 | 1/4 | - | 1/2P |
| 8 | 6 | 1/4 | - | 3/4P |

Table 3 shows that a value of the parameter $\beta$ in the codebook parameter set is determined based on the value of P.

Table 4

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 1 | 2 | 1/4P | 1/8P | 1/4 |
| 2 | 2 | 1/4P | 1/8P | 1/4 |
| 3 | 4 | 1/4P | 1/8P | 1/4 |
| 4 | 4 | 1/4P | 1/8P | 1/2 |
| 5 | 4 | 1/4P | 1/4P | ¾ |
| 6 | 4 | 1/2P | 1/4P | ½ |
| 7 | 6 | 1/4P | - | ½ |
| 8 | 6 | 1/4P | - | 3/4 |

Table 4 shows that a value of the parameter $p_\upsilon$ in the codebook parameter set is determined based on the value of P.

Table 5

| Codebook parameter combination index | L | $p_\upsilon$ | | $\beta$ |
|---|---|---|---|---|
| | | $\upsilon \in \{1, 2\}$ | $\upsilon \in \{3,4\}$ | |
| 1 | 2P | 1/4P | 1/8P | 1/4P |
| 2 | 2P | 1/4P | 1/8P | 1/2P |
| 3 | 4P | 1/4P | 1/8P | 1/4P |
| 4 | 4P | 1/4P | 1/8P | 1/2P |
| 5 | 4P | 1/4P | 1/4P | 3/4P |
| 6 | 4P | 1/2P | 1/4P | 1/2P |
| 7 | 6P | 1/4P | - | 1/2P |
| 8 | 6P | 1/4P | - | 3/4P |

Table 5 shows that values of all the parameters in the codebook parameter set are determined based on the value of P. In addition, configurations in Table 5 may be applied to a case in which P=K.

Further, the terminal device may further send an uplink reference signal to the network device, and the network device may estimate channel information between the terminal device and the network device by measuring the uplink reference signal. Further, the network device may determine, based on the PMI information and/or the channel information estimated based on the uplink reference signal, channel information corresponding to a port group, and perform transmission of downlink data based on the port group and the channel information corresponding to the port group. For example, FIG. 4 shows, by using dashed lines, optional steps S405 to S408 after S404 is performed.

S405: The network device sends second configuration information to the terminal device, where the second configuration information is used to configure uplink transmission resources corresponding to the K port groups.

It may be understood that the uplink transmission resource is used for transmission of the uplink reference signal, and the uplink transmission resource includes one or more of the following: time domain resource, frequency domain resource, code domain resource, space domain resource, and transmission periodicity. Optionally, the second configuration information may further indicate a type of the uplink reference signal sent to the network device, for example, sounding reference signal (sounding reference signal, SRS) or random access preamble (random access preamble, RAP).

Optionally, in the radio access network RAN shown in FIG. 1B, S405 may be implemented as follows: The CU-CP corresponding to the network device generates the second configuration information, and sends the second configuration information to the terminal device via the DU and the RU. In the O-RAN system, S405 may be implemented as follows: The O-CU-CP corresponding to the network device generates the second configuration information, and sends the second configuration information to the terminal device via the O-DU and the O-RU.

It may be understood that the network device may send the first configuration information and the second configuration information by using one message/signaling, or the network device may send the first configuration information and the second configuration information by using different messages/different signaling. This is not limited in this embodiment of this application.

S406: The terminal device sends, based on the second configuration information, the uplink reference signal on the uplink transmission resources corresponding to the K port groups.

S407: The network device determines P' groups of channel information based on the uplink reference signal received on the uplink transmission resource corresponding to the K ports.

Specifically, for this step, refer to S403 for implementation. Details are not described in this embodiment of this application. Optionally, P' is a positive integer less than or equal to P.

In a possible implementation, the P' groups of channel information include partial channel information in the P groups of channel information, and the P' groups of channel information may be used to assist the network device in determining the P groups of channel information. In view of this, in a possible design, when the terminal device feeds back the PMI information in S404, feedback for partial content of the PMI information can be reduced, thereby reducing feedback overheads.

For example, the terminal device does not need to feed back the port or DFT codebook information related to $W_1$, the IDFT base selection information related to $W_f^H$, and the non-zero element in $\tilde{W}_2$, and indicates only, in the PMI information, the first parameters $A_{0,l}$, $A_{1,l}$, ... , $A_{P-1,l}$ respectively corresponding to the P groups of channel information, where $l$ is an integer from 1 to v. For example, the terminal device does not need to feed back the port or DFT codebook

information related to $W_1$, the IDFT base selection information related to $W_f^H$, and the non-zero element in $\tilde{W}_2$, and does not need to feed back a first parameter corresponding to one group of channel information in the P groups of channel information, for example, a first parameter $A_{0,l}$ corresponding to a group of channel information numbered 0, and indicates only, in the PMI information, first parameters $A_{1,l}, ..., A_{P-1,l}$ respectively corresponding to remaining (P-1) groups of channel information, where $l$ is an integer from 1 to v. For another example, the terminal device does not need to feed back the port or DFT codebook information related to $W_1$, the IDFT base selection information related to $W_f^H$, and the non-zero element in $\tilde{W}_2$, and does not need to feed back first parameters $A_{0,l}, ..., A_{X-1,l}$ corresponding to X groups of channel information in the P groups of channel information, where X is greater than 1, and indicates only, in the PMI information, first parameters $A_{0,l}, ..., A_{P-X-1,l}$ respectively corresponding to (P-X) groups of channel information, where $l$ is an integer from 1 to v.

S408: The network device performs transmission of the downlink data based on the PMI information and/or the P' groups of channel information.

For example, the network device may determine at least one of the P groups of channel information based on the PMI information and/or the P' groups of channel information. Then, the network device may further select one group of channel information from the determined at least one group of channel information, and perform transmission of the downlink data based on a port group corresponding to the group of channel information and the group of channel information.

According to the method provided in this embodiment of this application, a plurality of groups of channel information can be fed back simultaneously, and a precoding matrix is compressed by using a codebook parameter, to reduce overheads for feeding back the channel information and reduce power consumption of the terminal device.

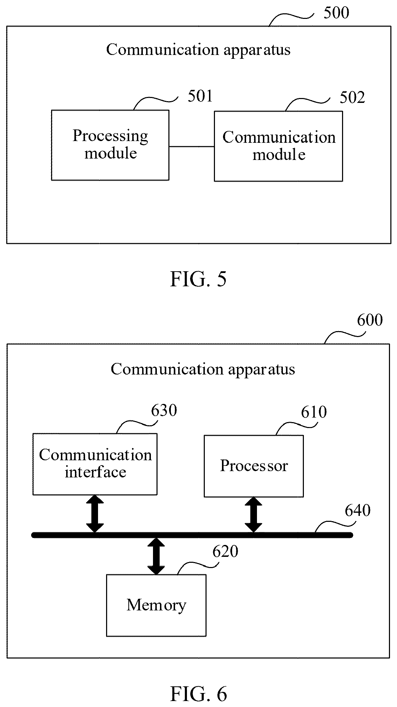

Based on a same concept, refer to FIG. 5. An embodiment of this application provides a communication apparatus 500. The communication apparatus 500 includes a processing module 501 and a communication module 502. The communication apparatus 500 may be a terminal device, or may be a communication apparatus that is used in the terminal device or used in matching with the terminal device and that can implement the precoding matrix transmission method performed by a terminal device side. Alternatively, the communication apparatus 500 may be a network device, or may be a communication apparatus that is used in the network device or used in matching with the network device and that can implement the precoding matrix transmission method performed by the network device.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device side or a network device side in the foregoing method. A device configured to implement a receiving function in the communication module may be considered as a receiving unit, and a device configured to implement a sending function in the communication module may be considered as a sending unit. In other words, the communication module includes the receiving unit and the sending unit.

When the communication apparatus 500 is used in the terminal device, the processing module 501 may be configured to implement a processing function of the terminal device in the example in FIG. 4, and the communication module 502 may be configured to implement receiving and sending functions of the terminal device in the example in FIG. 4. Optionally, the communication apparatus may alternatively be understood with reference to the third aspect and the possible designs in the third aspect in the summary.

When the communication apparatus 500 is used on the network device side, the processing module 501 may be configured to implement a processing function of the network device in the example in FIG. 4, and the communication module 502 may be configured to implement receiving and sending functions of the network device in the example in FIG. 4. Optionally, the communication apparatus may alternatively be understood with reference to the fourth aspect and the possible designs in the fourth aspect in the summary.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

In this embodiment of this application, module division is an example, and is merely a logical function division. During actual implementation, another division manner may be used. In addition, functional modules in the examples in embodiments of this application may be integrated into one processor, or may exist alone physically, or two or more modules are integrated into one module. The integrated module may be implemented in a form of hardware, or may be implemented in a form of a software functional module.

Based on a same technical concept, an embodiment of this application further provides a communication apparatus 600. For example, the communication apparatus 600 may be a chip or a chip system. Optionally, in embodiments of this application, the chip system may include a chip, or may include a chip and another discrete device.

The communication apparatus 600 may be configured to implement a function of any network element in the communication system described in the foregoing example. The communication apparatus 600 may include at least one processor 610. Optionally, the processor 610 is coupled to a memory. The memory may be located in the apparatus; the memory may be integrated with the processor; or the memory may be located outside the apparatus. For example, the communication apparatus 600 may further include at least one memory 620. The memory 620 stores a computer program, a computer program or instructions, and/or data that are/is necessary for implementing any one of the foregoing examples. The processor 610 may execute the computer program stored in the memory 620, to complete the method in any one of the foregoing examples.

The communication apparatus 600 may further include a communication interface 630. The communication apparatus 600 may perform information interaction with another device through the communication interface 630. For example, the communication interface 630 may be a transceiver, a circuit, a bus, a module, a pin, or a communication interface of another type. When the communication apparatus 600 is a chip-type apparatus or circuit, the communication interface 630 in the apparatus 600 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 610 may operate in collaboration with the memory 620 and the communication interface 630. A specific connection medium between the processor 610, the memory 620, and the communication interface 630 is not limited in embodiments of this application.

Optionally, with reference to FIG. 6, the processor 610, the memory 620, and the communication interface 630 are connected to each other through a bus 640. The bus 640 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 6, but this does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in embodiments of this application in embodiments of this application. The general-purpose processor may be a microprocessor, any conventional processor, or the like. The steps of the method in combination with embodiments of this application may be directly performed and completed by a hardware processor, or may be performed and completed by a combination of hardware and software modules in the processor.

In this embodiment of this application, the memory may be a non-volatile memory, like a hard disk drive (hard disk drive, HDD) or a solid-state drive (solid-state drive, SSD), or may be a volatile memory (volatile memory), like a random access memory (random access memory, RAM). The memory is any other medium that can carry or store expected program code in a form of an instruction structure or a data structure and that is accessible by a computer, but is not limited thereto. In this embodiment of this application, the memory may alternatively be a circuit or any other apparatus that can implement a storage function, and is configured to store the program instructions and/or the data.

In a possible implementation, the communication apparatus 600 may be used in a terminal device. Specifically, the communication apparatus 600 may be the terminal device, or may be an apparatus that can support the terminal device in implementing a function of the terminal device in any one of the foregoing examples. The memory 620 stores a computer program (or instructions) and/or data for implementing the function of the terminal device in any one of the foregoing examples. The processor 610 may execute the computer program stored in the memory 620, to complete the method performed by the terminal device in any one of the foregoing examples. For example, when the communication apparatus is used in the terminal device, the communication interface in the communication apparatus 600 may be configured to: perform interaction with a network device, and send information to the network device or receive information from the network device.

In another possible implementation, the communication apparatus 600 may be used in a network device. Specifically, the communication apparatus 600 may be the network device, or may be an apparatus that can support the network device in implementing a function of the network device in any one of the foregoing examples. The memory 620 stores a computer program (or instructions) and/or data for implementing the function of the network device in any one of the foregoing examples. The processor 610 may execute the computer program stored in the memory 620, to complete the method performed by the network device in any one of the foregoing examples. For example, when the communication apparatus is used in the network device, the communication interface in the communication apparatus 600 may be configured to: perform interaction with a terminal device, and send information to the terminal device or receive information from the terminal device.

The communication apparatus 600 provided in this example may be used in the network device to complete the method performed by a cell on a network device side, or may be used in the terminal device to complete the method performed by the terminal device. Therefore, for technical effects that can be achieved by the communication apparatus, refer to the foregoing method examples. Details are not described herein again.

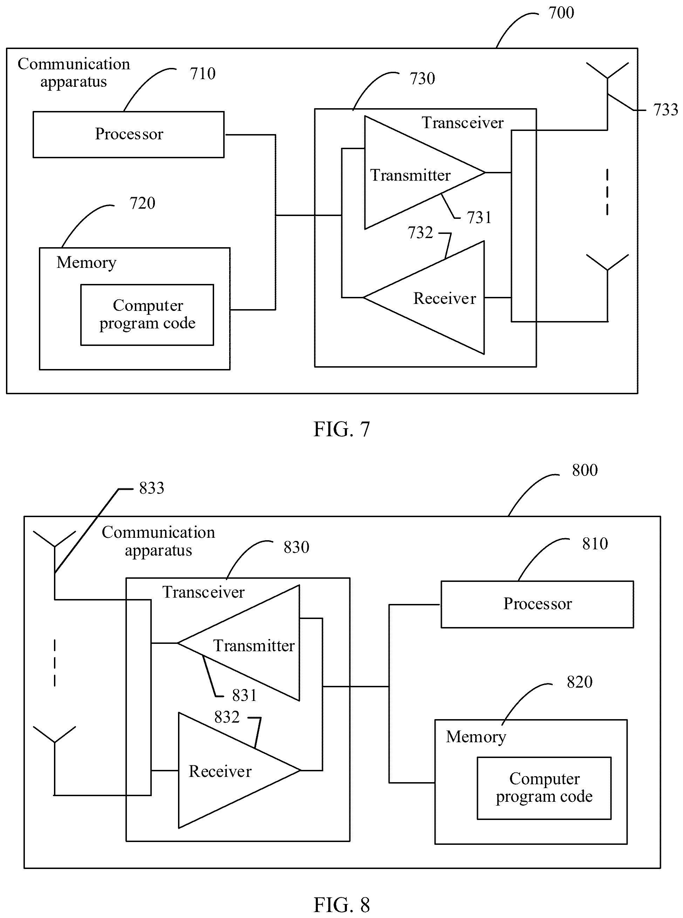

Based on a same technical concept, an embodiment of this application further provides a communication apparatus 700. As shown in FIG. 7, the communication apparatus 700 may be a terminal device, a processor of the terminal device, or a chip. The communication apparatus 700 may be configured to perform an operation performed by the terminal device in the foregoing method embodiment.

When the communication apparatus 700 is the terminal device, FIG. 7 is a simplified diagram of a structure of the terminal device. As shown in FIG. 7, the terminal device includes a processor, a memory, and a transceiver. The memory may store computer program code. The transceiver includes a transmitter 731, a receiver 732, a radio frequency circuit (not shown in the figure), an antenna 733, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 7 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver module of the terminal device, and the processor that has a processing function may be considered as a processing module of the terminal device.

As shown in FIG. 7, the terminal device includes the processor 710, the memory 720, and the transceiver 730. The processor 710 may also be referred to as a processing unit, a processing board, a processing module, a processing apparatus, or the like. The transceiver 730 may also be referred to as a transceiver unit, a transceiver machine, a transceiver apparatus, or the like.

Optionally, a device that is in the transceiver 730 and that is configured to implement a receiving function may be considered as a receiving module, and a device that is in the transceiver 730 and that is configured to implement a sending function may be considered as a sending module. That is, the transceiver 730 includes a receiver device and a transmitter device. The transceiver sometimes may also be referred to as a transceiver machine, a transceiver module, a transceiver circuit, or the like. The receiver device sometimes may also be referred to as a receiver, a receiving module, a receiver circuit, or the like. The transmitter device may also be sometimes referred to as a transmitter, a transmitting module, a transmitter circuit, or the like.

For example, the processor 710 is configured to perform a processing action on a terminal device side in the embodiment shown in FIG. 4, and the transceiver 730 is configured to perform receiving and sending actions on the terminal device side in FIG. 4.

It should be understood that FIG. 7 is merely an example rather than a limitation, and the terminal device including the transceiver module and the processing module may not depend on the structure shown in FIG. 7.

When the communication apparatus 700 is the chip, the chip includes a processor and a transceiver. The transceiver may be an input/output circuit or a communication interface. The processor may be a processing module, a microprocessor, or an integrated circuit integrated on the chip. A sending operation performed by the terminal device in the foregoing method embodiment may be understood as an output of the chip, and a receiving operation performed by the terminal device in the foregoing method embodiment may be understood as an input of the chip.

Based on a same technical concept, an embodiment of this application further provides a communication apparatus 800. The communication apparatus 800 may be a network device or a chip. The communication apparatus 800 may be configured to perform an operation performed by the network device in the foregoing method embodiment.

When the communication apparatus 800 is the network device, for example, a base station, FIG. 8 is a simplified diagram of a structure of the base station. The base station includes a part 810, a part 820, and a part 830. The part 810 is mainly configured to: perform baseband processing, control the base station, and the like. The part 810 is usually a control center of the base station, may be usually referred to as a processor, and is configured to control the base station to perform a processing operation on a network device side in the foregoing method embodiment. The part 820 is mainly configured to store computer program code and data. The part 830 is mainly configured to: receive and send a radio frequency signal, and perform conversion between the radio frequency signal and a baseband signal. The part 830 may be usually referred to as a transceiver module, a transceiver machine, a transceiver circuit, a transceiver, or the like. The transceiver module in the part 830 may also be referred to as a transceiver machine, a transceiver, or the like, and includes an antenna 833 and a radio frequency circuit (not shown in the figure). The radio frequency circuit is mainly configured to perform radio frequency processing. Optionally, in the part 830, a device configured to implement a receiving function may be considered as a receiver, and a device configured to implement a sending function may be considered as a transmitter. In other words, the part 830 includes a receiver 832 and a transmitter 831. The receiver may also be referred to as a receiving module, a receiver device, a receiver circuit, or the like. The transmitter may be referred to as a transmitting module, a transmitter device, a transmitter circuit, or the like.

The part 810 and the part 820 may include one or more boards, and each board may include one or more processors and one or more memories. The processor is configured to read and execute a program in the memory, to implement a baseband processing function and control the base station. If there are a plurality of boards, all the boards may be interconnected with each other to enhance a processing capability. In an optional implementation, a plurality of boards may share one or more processors, a plurality of boards share one or more memories, or a plurality of boards simultaneously share one or more processors.

In an implementation, the transceiver module in the part 830 is configured to perform receiving and sending-related processes performed by the network device in the embodiment shown in FIG. 4. The processor in the part 810 is configured to perform a processing-related process performed by the network device in the embodiment shown in FIG. 4.

It should be understood that FIG. 8 is merely an example instead of a limitation, and the network device including the processor, the memory, and the transceiver may not depend on the structure shown in FIG. 8.

When the communication apparatus 800 is the chip, the chip includes a transceiver and a processor. The transceiver may be an input/output circuit or a communication interface. The processor is a processor, a microprocessor, or an integrated circuit integrated on the chip. A sending operation performed by the network device in the foregoing method embodiment may be understood as an output of the chip, and a receiving operation performed by the network device in the foregoing method embodiment may be understood as an input of the chip.

An embodiment of this application further provides a communication system. The communication system includes the terminal device and the network device in the foregoing embodiments. The terminal device is configured to perform all or a part of steps in the embodiment shown in FIG. 4. The network device is configured to perform all or a part of steps in the embodiment shown in FIG. 4.

The technical solutions provided in embodiments of this application may be fully or partially implemented through software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a terminal device, a network device, or another programmable apparatus. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible to the computer, or a data storage device, like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, on the premise that there is no logical contradiction, the examples may be mutually referenced. For example, the methods and/or the terms in the method embodiment may be mutually referenced. For example, the functions and/or the terms in the apparatus embodiments may be mutually referenced. For example, the functions and/or the terms between the apparatus example and the method example may be mutually referenced.

It is clear that a person skilled in the art may make various modifications and variations to embodiments of this application without departing from the scope of embodiments of this application. In this way, embodiments of this application are also intended to cover these modifications and variations provided that these modifications and variations of embodiments of this application fall within the scope of the claims of embodiments of this application and equivalent technologies thereof.

**Claims**

1. A precoding matrix transmission method, comprising:

   receiving first configuration information, wherein the first configuration information is used to configure downlink transmission resources corresponding to K port groups, each of the K port groups comprises a plurality of antenna ports, and K is a positive integer; and
   sending precoding matrix indicator PMI information, wherein the PMI information indicates v groups of parameters, and any one of the v groups of parameters comprises at least one first parameter, wherein the at least one first parameter corresponds to at least one of the P groups of channel information, the P groups of channel information are determined based on a downlink reference signal received on the downlink transmission resources corresponding to the K port groups, v is a positive integer, and P is an integer greater than 1.

2. The method according to claim 1, further comprising:

   receiving second configuration information, wherein the second configuration information is used to configure uplink transmission resources corresponding to the K port groups; and
   sending, based on the second configuration information, an uplink reference signal on the uplink transmission resources corresponding to the K port groups.

3. The method according to claim 1 or 2, further comprising:

   receiving information indicating a value of P; or
   receiving index set information indicating the P groups of channel information.

4. A precoding matrix transmission method, comprising:

   sending first configuration information, wherein the first configuration information is used to configure downlink transmission resources corresponding to K port groups, each of the K port groups comprises a plurality of antenna ports, and K is a positive integer; and
   receiving precoding matrix indicator PMI information, wherein the PMI information indicates v groups of parameters, and any one of the v groups of parameters comprises at least one first parameter, wherein the at least one first parameter corresponds to at least one of the P groups of channel information, the P groups of channel information are determined based on a downlink reference signal received on the downlink transmission resources corresponding to the K port groups, v is a positive integer, and P is an integer greater than 1.

5. The method according to claim 4, further comprising:

   sending second configuration information, wherein the second configuration information is used to configure uplink transmission resources corresponding to the K port groups;
   receiving an uplink reference signal on the uplink transmission resources corresponding to the K port groups, and determining P' groups of channel information based on the received uplink reference signal, wherein P' is a positive integer less than or equal to P; and
   performing transmission of downlink data based on the PMI and/or the P' groups of channel information.

6. The method according to claim 4 or 5, further comprising:

   sending information indicating a value of P; or
   sending index set information indicating the P groups of channel information.

7. The method according to any one of claims 1 to 6, wherein the any one of the v groups of parameters further comprises a common parameter combination corresponding to the P groups of channel information, wherein the common parameter combination comprises one or more of the following parameters: second parameter $W_1$, third parameter $W_f^H$, and fourth parameter $\tilde{W}_2$, the PMI information is used to determine v groups of precoding matrices, any one of the v groups of precoding matrices comprises a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \widetilde{W}_2 \times W_f^H;$$

or

$$W = A_{p,l} \times W_1 \times \widetilde{W}_2 \times W_f^H,$$

wherein
$A_{p,l}$ represents an identity matrix or a first parameter that corresponds to a group of channel information numbered $p$ in the P groups of channel information and that is comprised in a group of parameters numbered $l$ in the v groups of parameters, $p$ is an integer less than or equal to P, $l$ is an integer less than or equal to v, and different values of $p$ correspond to different $A_{p,l}$.

8. The method according to any one of claims 1 to 6, wherein the any one of the v groups of parameters further comprises one or more of the following parameters: second parameter $W_1$, third parameter $W_f^H$, and fourth parameter $\tilde{W}_2$, the PMI information is used to determine v groups of precoding matrices, any one of the v groups of precoding matrices comprises a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \widetilde{W}_2 \times W_f^H;$$

or

$$W = A_{p,l} \times W_1 \times \widetilde{W}_2 \times W_f^H,$$

wherein
$A_{p,l}$ represents an identity matrix or a first parameter that corresponds to a group of channel information numbered $p$ in the P groups of channel information and that is comprised in a group of parameters numbered $l$ in the v groups of parameters, $p$ is an integer less than or equal to P, $l$ is an integer less than or equal to v, and different values of $p$ correspond to different $A_{p,l}$.

9. The method according to claim 7 or 8, wherein $A_{p,l}$ is determined based on F coefficients, F is an integer greater than 1, and a value of F is determined based on the value of P or a quantity of antenna ports comprised in one of the K port groups.

10. The method according to claim 9, wherein the F coefficients comprise a first part of coefficients and a second part of coefficients, wherein
the first part of coefficients are the same as the second part of coefficients, and the PMI information indicates the first part of coefficients or the second part of coefficients; or the second part of coefficients are determined based on the first part of coefficients and a first coefficient, and the PMI information indicates the first part of coefficients and the first coefficient.

11. The method according to claim 9, wherein a value of one of the F coefficients is one of J values, and the PMI information indicates the J values; or the F coefficients comprise a first part of coefficients and a second part of coefficients, a value of a coefficient in the first part of coefficients is one of J values, the second part of coefficients are determined based on a second coefficient and the first part of coefficients, and the PMI information comprises the J values and the second coefficient, wherein J is a positive integer less than or equal to F.

12. The method according to claim 11, wherein a value of J corresponds to a quantity of sub port groups comprised in one port group.

13. The method according to any one of claims 1 to 12, wherein a parameter comprised in the any one of the v groups of parameters is determined based on a codebook parameter combination, the codebook parameter combination comprises one or more of the following parameters: quantity L of beams, factor $p_0$ of a quantity of vectors, and factor $\beta$ of a quantity of non-zero elements, and a value of at least one parameter in the codebook parameter combination is determined based on the value of P.

14. The method according to any one of claims 1 to 13, wherein the first configuration information is further used to configure Q groups of coefficients, Q is greater than K, Q groups of channel information determined based on the Q groups of coefficients and K groups of channel information comprise the P groups of channel information, and the K groups of channel information are determined based on the downlink reference signal on the downlink transmission resources corresponding to the K port groups.

15. The method according to any one of claims 1 to 10, wherein K is greater than 1, K groups of channel information are determined based on the downlink reference signal on the downlink transmission resources corresponding to the K port groups, the K groups of channel information comprise the P groups of channel information, and P is less than or equal to K.

16. A communication apparatus, comprising a processing module, a receiving unit, and a sending unit, wherein

the receiving unit is configured to receive first configuration information, wherein the first configuration information is used to configure downlink transmission resources corresponding to K port groups, each of the K port groups comprises a plurality of antenna ports, and K is a positive integer; and
the sending unit is configured to send precoding matrix indicator PMI information under control of the processing module, wherein the PMI information indicates v groups of parameters, and any one of the v groups of parameters comprises at least one first parameter, wherein the at least one first parameter corresponds to at least one of the P groups of channel information, the P groups of channel information are determined based on a downlink reference signal received on the downlink transmission resources corresponding to the K port groups, v is a positive integer, and P is an integer greater than 1.

17. The apparatus according to claim 16, wherein

the receiving unit is further configured to receive second configuration information, wherein the second configuration information is used to configure uplink transmission resources corresponding to the K port groups; and
the processing module is further configured to send, based on the second configuration information, an uplink reference signal on the uplink transmission resources corresponding to the K port groups.

18. The apparatus according to claim 16 or 17, wherein the receiving unit is further configured to:

receive information indicating a value of P; or
receive index set information indicating the P groups of channel information.

19. A precoding matrix transmission apparatus, comprising a processing module, a sending unit, and a receiving unit, wherein

the sending unit is configured to send first configuration information under control of the processing module, wherein the first configuration information is used to configure downlink transmission resources corresponding to K port groups, each of the K port groups comprises a plurality of antenna ports, and K is a positive integer; and
the receiving unit is configured to receive precoding matrix indicator PMI information, wherein the PMI information indicates v groups of parameters, and any one of the v groups of parameters comprises at least one first parameter, wherein the at least one first parameter corresponds to at least one of the P groups of channel information, the P groups of channel information are determined based on a downlink reference signal received on the downlink transmission resources corresponding to the K port groups, v is a positive integer, and P is an integer greater than 1.

20. The apparatus according to claim 19, wherein

the sending unit is further configured to send second configuration information, wherein the second configuration information is used to configure uplink transmission resources corresponding to the K port groups;

the receiving unit is further configured to receive an uplink reference signal on the uplink transmission resources corresponding to the K port groups; and
the processing module is further configured to:

determine P' groups of channel information based on the received uplink reference signal, wherein P' is a positive integer less than or equal to P; and
perform transmission of downlink data based on the PMI and/or the P' groups of channel information.

21. The apparatus according to claim 19 or 20, wherein the sending unit is further configured to:

send information indicating a value of P; or
send index set information indicating the P groups of channel information.

22. The apparatus according to any one of claims 16 to 21, wherein the any one of the v groups of parameters further comprises a common parameter combination corresponding to the P groups of channel information, wherein the common parameter combination comprises one or more of the following parameters: second parameter $W_1$, third parameter $W_f^H$, and fourth parameter $\tilde{W}_2$, the PMI information is used to determine v groups of precoding matrices, any one of the v groups of precoding matrices comprises a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \tilde{W}_2 \times W_f^H;$$

or

$$W = A_{p,l} \times W_1 \times \tilde{W}_2 \times W_f^H,$$

wherein
$A_{p,l}$ represents an identity matrix or a first parameter that corresponds to a group of channel information numbered $p$ in the P groups of channel information and that is comprised in a group of parameters numbered $l$ in the v groups of parameters, $p$ is an integer less than or equal to P, $l$ is an integer less than or equal to v, and different values of $p$ correspond to different $A_{p,l}$.

23. The apparatus according to any one of claims 16 to 21, wherein the any one of the v groups of parameters further comprises one or more of the following parameters: second parameter $W_1$, third parameter $W_f^H$, and fourth parameter $\tilde{W}_2$, the PMI information is used to determine v groups of precoding matrices, any one of the v groups of precoding matrices comprises a precoding matrix corresponding to each of the P groups of channel information, and a precoding matrix $W$ numbered $p$ in a group of precoding matrices numbered $l$ in the v groups of precoding matrices satisfies the following relational expression:

$$W = W_1 \times A_{p,l} \times \tilde{W}_2 \times W_f^H;$$

or

$$W = A_{p,l} \times W_1 \times \tilde{W}_2 \times W_f^H,$$

wherein
$A_{p,l}$ represents an identity matrix or a first parameter that corresponds to a group of channel information numbered $p$ in the P groups of channel information and that is comprised in a group of parameters numbered $l$ in the v groups of parameters, $p$ is an integer less than or equal to P, $l$ is an integer less than or equal to v, and different values of $p$ correspond to different $A_{p,l}$.

24. The apparatus according to claim 22 or 23, wherein $A_{p,l}$ is determined based on F coefficients, F is an integer greater than 1, and a value of F is determined based on the value of P or a quantity of antenna ports comprised in one of the K port groups.

25. The apparatus according to claim 24, wherein the F coefficients comprise a first part of coefficients and a second part of coefficients, wherein
the first part of coefficients are the same as the second part of coefficients, and the PMI information indicates the first part of coefficients or the second part of coefficients; or the second part of coefficients are determined based on the first part of coefficients and a first coefficient, and the PMI information indicates the first part of coefficients and the first coefficient.

26. The apparatus according to claim 24, wherein a value of one of the F coefficients is one of J values, and the PMI information indicates the J values; or the F coefficients comprise a first part of coefficients and a second part of coefficients, a value of a coefficient in the first part of coefficients is one of J values, the second part of coefficients are determined based on a second coefficient and the first part of coefficients, and the PMI information comprises the J values and the second coefficient, wherein J is a positive integer less than or equal to F.

27. The apparatus according to claim 26, wherein a value of J corresponds to a quantity of sub port groups comprised in one port group.

28. The apparatus according to any one of claims 16 to 27, wherein a parameter comprised in the any one of the v groups of parameters is determined based on a codebook parameter combination, the codebook parameter combination comprises one or more of the following parameters: quantity L of beams, factor $p_\upsilon$ of a quantity of vectors, and factor $\beta$ of a quantity of non-zero elements, and a value of at least one parameter in the codebook parameter combination is determined based on the value of P.

29. The apparatus according to any one of claims 16 to 27, wherein the first configuration information is further used to configure Q groups of coefficients, Q is greater than K, Q groups of channel information determined based on the Q groups of coefficients and K groups of channel information comprise the P groups of channel information, and the K groups of channel information are determined based on the downlink reference signal on the downlink transmission resources corresponding to the K port groups.

30. The apparatus according to any one of claims 16 to 25, wherein K is greater than 1, K groups of channel information are determined based on the downlink reference signal on the downlink transmission resources corresponding to the K port groups, the K groups of channel information comprise the P groups of channel information, and P is less than or equal to K.

31. A communication apparatus, comprising:
a processor, wherein the processor is coupled to a memory, and the processor is configured to invoke computer program instructions stored in the memory, to perform the method according to any one of claims 1 to 15.

32. A computer-readable storage medium, wherein the computer-readable storage medium stores instructions, and when the instructions are run on a computer, the computer is caused to perform the method according to any one of claims 1 to 15.

FIG. 1A

FIG. 1B

FIG. 2

Network device

CSI-RS     CSI-RS     CSI-RS

Terminal device

PMI #0     PMI #1     PMI #2     t

FIG. 3

Terminal device | Network device

S401: First configuration information
(downlink transmission resources
corresponding to K port groups)

S402: Send a downlink reference signal
on the downlink transmission resources
corresponding to the K port groups

S403: Determine P groups of channel
information based on the downlink reference
signal received on the downlink transmission
resources corresponding to the K port groups

S404: PMI information
(determined based on the P groups
of channel information)

S405: Second configuration
information
(uplink transmission resources
corresponding to the K port groups)

S406: Send an uplink reference
signal on the uplink transmission
resources corresponding to the K
port groups

S407: Determine P' groups of
channel information based on the
uplink reference signal received on
the uplink transmission resources
corresponding to the K port groups

S408: Downlink data
(based on the PMI information
and/or the P' groups of channel
information)

FIG. 4

500

Communication apparatus

501

Processing module

502

Communication module

FIG. 5

600

Communication apparatus

630

Communication interface

610

Processor

640

620

Memory

FIG. 6

FIG. 7

FIG. 8

## INTERNATIONAL SEARCH REPORT

| International application No. |
|---|
| **PCT/CN2024/114281** |

| A. | CLASSIFICATION OF SUBJECT MATTER |
|---|---|
| | H04L 1/00(2006.01)i |

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 端口组, 天线, 预编码矩阵指示, 预编码矩阵索引, 下行传输资源, 信道信息, 混合波束成形, 终端, CSI, port groups, antenna, PMI, HBF, UE

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 109150256 A (HUAWEI TECHNOLOGIES CO., LTD.) 04 January 2019 (2019-01-04) description, paragraphs [0003]-[0470] | 1-6, 15-21, 30-32 |
| Y | CN 107181514 A (CHINA ACADEMY OF TELECOMMUNICATIONS TECHNOLOGY) 19 September 2017 (2017-09-19) description, paragraphs [0005]-[0310] | 1-6, 15-21, 30-32 |
| A | CN 108023624 A (HUAWEI TECHNOLOGIES CO., LTD.) 11 May 2018 (2018-05-11) entire document | 1-32 |
| A | CN 111027461 A (CHANG'AN UNIVERSITY) 17 April 2020 (2020-04-17) entire document | 1-32 |
| A | CN 112803975 A (HUAWEI TECHNOLOGIES CO., LTD.) 14 May 2021 (2021-05-14) entire document | 1-32 |
| A | US 2021184742 A1 (ZTE CORP.) 17 June 2021 (2021-06-17) entire document | 1-32 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2024** | **19 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/114281**

| Patent document cited in search report | | | Publication date (day/month/year) | Patent family member(s) | | | Publication date (day/month/year) |
|---|---|---|---|---|---|---|---|
| CN | 109150256 | A | 04 January 2019 | US | 2020119788 | A1 | 16 April 2020 |
| | | | | US | 11018738 | B2 | 25 May 2021 |
| | | | | EP | 3641149 | A1 | 22 April 2020 |
| | | | | EP | 3641149 | A4 | 27 May 2020 |
| | | | | EP | 3641149 | B1 | 15 May 2024 |
| CN | 107181514 | A | 19 September 2017 | JP | 2019512948 | A | 16 May 2019 |
| | | | | JP | 6837074 | B2 | 03 March 2021 |
| | | | | EP | 3429091 | A1 | 16 January 2019 |
| | | | | EP | 3429091 | A4 | 27 March 2019 |
| | | | | EP | 3429091 | B1 | 28 April 2021 |
| | | | | US | 2019074884 | A1 | 07 March 2019 |
| | | | | US | 10742292 | B2 | 11 August 2020 |
| | | | | WO | 2017152785 | A1 | 14 September 2017 |
| | | | | KR | 20180122412 | A | 12 November 2018 |
| | | | | KR | 102147224 | B1 | 24 August 2020 |
| CN | 108023624 | A | 11 May 2018 | US | 2019260453 | A1 | 22 August 2019 |
| | | | | US | 10924174 | B2 | 16 February 2021 |
| | | | | JP | 2019537874 | A | 26 December 2019 |
| | | | | EP | 3506522 | A1 | 03 July 2019 |
| | | | | EP | 3506522 | A4 | 31 July 2019 |
| CN | 111027461 | A | 17 April 2020 | None | | | |
| CN | 112803975 | A | 14 May 2021 | None | | | |
| US | 2021184742 | A1 | 17 June 2021 | US | 11764846 | B2 | 19 September 2023 |
| | | | | EP | 3780443 | A1 | 17 February 2021 |
| | | | | EP | 3780443 | A4 | 05 January 2022 |
| | | | | US | 2023379028 | A1 | 23 November 2023 |
| | | | | WO | 2019196899 | A1 | 17 October 2019 |

Form PCT/ISA/210 (patent family annex) (July 2022)

**EP 4 742 568 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

CN 202311086557